(19) Europäisches Patentamt / European Patent Office / Office européen des brevets

(11) **EP 1 265 371 B1**

(12) **FASCICULE DE BREVET EUROPEEN**

(45) Date de publication et mention
de la délivrance du brevet:
**22.08.2007 Bulletin 2007/34**

(51) Int Cl.:
***H04B 1/707*** *(2006.01)*     ***G01S 1/04*** *(2006.01)*

(21) Numéro de dépôt: **01202201.8**

(22) Date de dépôt: **08.06.2001**

(54) **Récepteur et procédé de reception de signaux radiofréquences avec des moyens de correction des effets des signaux à trajets multiplex**

Empfänger für Funksignale mit Mitteln zur Korrektur der Mehrwegeffekte und Verfahren

Radio receiver with means for correcting multipath effects and method

(84) Etats contractants désignés:
**AT BE CH CY DE DK ES FI FR GB GR IE IT LI LU MC NL PT SE TR**

(43) Date de publication de la demande:
**11.12.2002 Bulletin 2002/50**

(73) Titulaire: **ASULAB S.A.**
**2074 Marin (CH)**

(72) Inventeurs:
• **Oesch, Yves**
**2000 Neuchâtel (CH)**
• **Monthéard, Anne**
**1312 Eclépens (CH)**
• **Farine, Pierre-André**
**2000 Neuchâtel (CH)**

(74) Mandataire: **Laurent, Jean et al**
**I C B**
**Ingénieurs Conseils en Brevets SA**
**Rue des Sors 7**
**2074 Marin (CH)**

(56) Documents cités:
**EP-A- 0 552 975**      **WO-A-97/40398**
**US-A1- 2001 002 458**

# Description

L'invention concerne un récepteur de signaux radiofréquences, notamment de type GPS, ayant des moyens de correction des effets des signaux à trajets multiples. L'invention concerne également un procédé de mise en action dudit récepteur.

Le récepteur de signaux radiofréquences modulés par des codes spécifiques de sources émettrices comprend des moyens de réception et mise en forme. Ces moyens permettent une conversion de fréquence des signaux radiofréquences pour fournir des signaux intermédiaires.

Le récepteur comprend en outre un étage de corrélation composé de plusieurs canaux de corrélation qui reçoivent les signaux intermédiaires. Chaque canal est muni d'un corrélateur dans lequel les signaux intermédiaires sont corrélés. Cette corrélation est réalisée au moyen d'au moins une boucle d'asservissement du corrélateur, lorsque le canal est utilisé, avec au moins deux répliques du code spécifique d'une source émettrice visible à chercher et à poursuivre, qui sont en avance de phase et en retard de phase. Le corrélateur comprend des moyens d'intégration des signaux corrélés pour fournir, au terme de chaque période d'intégration, une première valeur d'amplitude de la fonction d'auto-corrélation des signaux en avance de phase et une seconde valeur d'amplitude de la fonction d'auto-corrélation des signaux en retard de phase. Dans un mode de poursuite de la source émettrice, les première et seconde valeurs d'amplitude sont maintenues sensiblement égales.

Le récepteur comprend également des moyens à microprocesseur reliés à l'étage de corrélation pour traiter les données extraites des signaux radiofréquences, après corrélation.

Si ledit récepteur est un récepteur GPS, les données extraites des signaux radiofréquences sont notamment le message GPS, les pseudo-distances et la fréquence Doppler, ces données servant au calcul de la position, de la vitesse et du temps (heure).

Le récepteur de signaux radiofréquences de la présente invention peut bien évidemment être utilisé également dans un système de navigation par satellites de type GLONASS ou GALILEO. De même, le récepteur pourrait servir dans un réseau de téléphonie mobile par exemple du type CDMA (Code-division multiple access en terminologie anglaise). Dans ce cas, les sources émettrices ne sont plus des satellites mais des cellules de base du réseau de téléphonie, et les données traitées concernent des messages audibles ou à lire, ou des messages de navigation.

Actuellement, 24 satellites sont placés en orbite à une distance proche de 20'200 Km au-dessus de la surface de la Terre sur 6 plans orbitaux décalés chacun de 55° par rapport à l'équateur. Le temps mis par un satellite pour accomplir une rotation complète en orbite afin de se retrouver au même point au-dessus de la Terre est environ de 12h. La répartition des satellites en orbite permet à un récepteur GPS terrestre de recevoir les signaux GPS d'au moins quatre satellites visibles pour déterminer par exemple sa position, sa vitesse et une heure locale.

Dans des applications civiles, chacun des satellites en orbite émet des signaux radiofréquences composés d'une fréquence porteuse L1 à 1,57542 GHz sur laquelle sont modulés un code pseudo-aléatoire PRN à 1,023 MHz propre à chaque satellite et un message GPS à 50 Hz. Le message GPS contient les données d'éphémérides et d'almanachs du satellite émetteur qui sont utiles notamment pour le calcul de la position en X, Y et Z, de la vitesse et des données temporelles.

Le code pseudo-aléatoire PRN (pseudo random noise), notamment du type code de Gold, est différent pour chaque satellite. Ce code de Gold est un signal numérique composé de 1023 chips qui se répètent toutes les millisecondes. Cette période de répétition est définie également par le terme époque (epoch en terminologie anglaise) du code de Gold. Il est à noter qu'un chip prend des valeurs 1 ou 0 comme pour un bit. Toutefois, un chip (terme utilisé dans la technique GPS) est à différencier d'un bit qui est utilisé pour définir une unité d'information.

Les codes de Gold, qui sont définis pour 32 numéros d'identification de satellites, ont la caractéristique d'être orthogonaux. En les corrélant l'un avec l'autre le résultat de la corrélation donne une valeur proche de 0. Cette caractéristique permet de pouvoir traiter indépendamment plusieurs signaux radiofréquences émis sur une même fréquence provenant de plusieurs satellites et de façon simultanée dans plusieurs canaux d'un même récepteur GPS.

Actuellement dans plusieurs activités quotidiennes, des récepteurs GPS portables ou incorporés notamment dans des véhicules sont employés pour permettre de fournir à des utilisateurs des données de navigation. Ces données facilitent notamment leur orientation, la recherche d'un but et la connaissance du lieu qu'ils occupent. De plus, les récepteurs portables ont tendance à être réduits en taille de manière à pouvoir également les incorporer dans des objets aisément transportables par une seule personne, tels que dans des téléphones cellulaires ou dans des montres-bracelets. Toutefois, comme ils sont alimentés par une batterie ou un accumulateur de taille réduite, il est souvent nécessaire de minimiser l'énergie consommée par les récepteurs.

Il est à noter qu'un récepteur GPS a besoin de capter les signaux radiofréquences provenant d'au moins quatre satellites visibles pour déterminer notamment sa position et des données temporelles. Le récepteur peut en outre prélever les données d'éphémérides propres à chaque satellite et les données d'almanachs en se verrouillant individuellement sur un des satellites visibles.

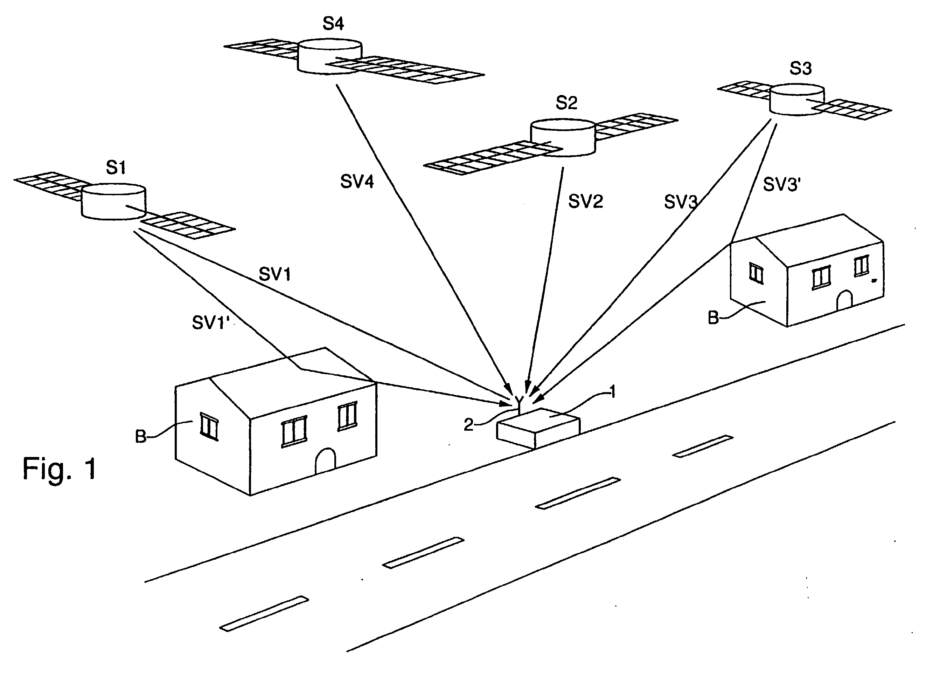

A la figure 1, un récepteur GPS 1 muni d'une antenne 2 de réception de signaux radiofréquences est représenté schématiquement. Ledit récepteur GPS 1 doit recevoir les signaux SV1 à SV4 provenant d'au moins quatre satellites S1 à S4 visibles pour qu'il puisse déterminer sa position, sa vitesse et des données temporelles. Cependant lorsque ledit récepteur 1 est employé dans des endroits entourés d'obstacles divers, tels que des bâtiments B dans des villes, certains signaux radiofréquences SV1' et SV3' captés par le récepteur 1 sont parfois réfléchis sur ces obstacles B. Ces signaux SV1' et SV3' réfléchis et combinés avec les signaux directs SV1 et SV3 qui proviennent de la même source émettrice peuvent induire des erreurs sur les données extraites de l'ensemble des signaux captés par le récepteur. Ces erreurs ont notamment des répercussions sur le calcul de la position du récepteur.

Des erreurs de phase dues aux signaux à trajets multiples peuvent être supérieures ou égales à 150 ns pour des récepteurs terrestres de navigation, ce qui correspond à une erreur de 45 m sur la position calculée. En général, les erreurs nominales sont dans une marge de 30 ns, ce qui correspond à une erreur d'environ 9 m sur une position calculée. Ces erreurs sont habituellement difficiles à éliminer totalement, même si ce phénomène des signaux à trajets multiples est bien connu. Plusieurs réalisations ont déjà été proposées pour minimiser l'effet de ces signaux à trajets multiples.

On peut citer notamment la demande de brevet WO 95/14937 de la société Novatel, qui décrit un récepteur de signaux radiofréquences codés à bruit pseudo-aléatoire muni de moyens pour compenser des distorsions dues aux signaux à trajets multiples. Pour ce faire, le récepteur comprend plusieurs canaux de corrélation qui sont destinés chacun à acquérir un satellite spécifique en même temps. Des moyens d'auto-corrélation de chaque canal comprennent plusieurs corrélateurs qui reçoivent chacun une réplique du code pseudo-aléatoire générée en interne et décalée en phase d'une autre réplique à corréler avec des signaux intermédiaires. Un estimateur de niveau de puissance de signaux de sortie de chaque corrélateur d'un canal est prévu pour éliminer les effets des signaux à trajets multiples. L'écart entre chaque réplique est par exemple inférieur à 0,2 chip ce qui exige une fréquence d'établissement élevée de chaque réplique.

Un inconvénient majeur de ce récepteur est que chaque canal est pourvu d'une multitude de corrélateurs pour les phases d'acquisition et de poursuite d'un satellite spécifique visible. De ce fait, le nombre d'éléments très élevé devant composer l'étage de corrélation des canaux conduit à une forte consommation d'énergie ce qui ne permet pas d'intégrer un tel récepteur dans un objet portable comprenant une source d'énergie de faible capacité.

Dans un même contexte technique, le brevet US 5,966,403 de Trimble Navigation Limited décrit un récepteur de signaux radiofréquences à large spectre qui comprend également des moyens permettant de minimiser les effets des signaux à trajets multiples. Ce document propose deux variantes de réalisations. Dans la première variante, on utilise une fonction de pondération uniforme ou non-uniforme de signaux pour la corrélation des signaux intermédiaires avec des répliques en avance et en retard. Les moyens à microprocesseur reçoivent plusieurs signaux corrélés et pondérés, et ferment les boucles d'asservissement de la porteuse et du code. Ces moyens à microprocesseur ont pour tâche d'estimer la distorsion des signaux due aux signaux à trajets multiples et de minimiser ladite distorsion.

Dans une seconde variante, deux canaux de corrélation du récepteur sont utilisés en parallèle pour la poursuite d'un même satellite dont les signaux émis sont susceptibles d'être déviés de leur trajectoire. Le second canal est utilisé pour permettre aux moyens à microprocesseur de minimiser la distorsion due aux signaux à trajets multiples. Un retard de phase est imposé pour la génération des répliques en avance et en retard de chaque canal afin que les moyens à microprocesseur puissent évaluer la distorsion due aux signaux à trajets multiples.

Comme pour le précédent document, un inconvénient de ces réalisations résident essentiellement dans la complexité de la structure de chaque canal permettant de minimiser les effets des signaux à trajets multiples. De plus, des moyens à microprocesseur de grande dimension sont utilisés pour toutes les tâches de synchronisation. Cette complexité conduit également à une forte consommation d'énergie ce qui ne permet pas d'intégrer un tel récepteur dans un objet portable de petite taille muni d'une source d'énergie de faible capacité.

Un autre exemple de récepteur avec compensation de la distorsion due aux signaux à trajets multiples, est décrit dans WO 97/40398 de SiRF Technology. Dans ce document un facteur empirique de compensation est appliqué pour la correction de cette distorsion.

Un but de la présente invention consiste à réaliser un récepteur de signaux radiofréquences susceptible de corriger les effets des signaux à trajets multiples tout en limitant le nombre d'éléments nécessaires du récepteur et en réduisant sa consommation afin de pallier les inconvénients des récepteurs de l'art antérieur. Le récepteur peut ainsi équiper des objets portables de petite taille.

Un autre but de la présente invention consiste à utiliser des canaux inutilisés du récepteur qui ont la même structure que les canaux utilisés pour permettre de corriger les effets de signaux à trajets multiples.

Ce but, ainsi que d'autres sont atteints grâce au récepteur cité ci-devant qui se caractérise en ce qu'au moins un second canal inutilisé est configuré par l'intermédiaire des moyens à microprocesseur pour être placé en parallèle d'au moins un premier canal utilisé pour la recherche et/ou la poursuite d'une même source émettrice visible quand les moyens à microprocesseur ont détecté la présence de signaux radiofréquences à trajets multiples dans le premier canal utilisé, les moyens à microprocesseur assurant un asservissement du second canal pour la génération d'une réplique du code spécifique à corréler avec les signaux intermédiaires afin que les moyens d'intégration du second canal fournissent une valeur d'amplitude maximale de la fonction d'auto-corrélation entre les première et seconde valeurs d'amplitude de la fonction d'auto-corrélation du premier canal.

Un avantage du récepteur de la présente invention est qu'il permet à l'aide de canaux identiques, qui comprennent chacun le même nombre d'éléments, en coopération de moyens à microprocesseur, de s'affranchir du problème des erreurs de calcul dues aux effets des signaux radiofréquences à trajets multiples. Lors du fonctionnement du récepteur, tous les canaux de corrélation ne sont pas utilisés, car le nombre de sources émettrices visibles, notamment de satellites visibles, est inférieur au nombre de canaux de corrélation du récepteur. Cela a pour conséquence qu'un certain nombre de canaux restent inutilisés. De ce fait, ces canaux définis comme inutilisés peuvent très bien être branchés en parallèle de canaux utilisés pour permettre à des moyens à microprocesseur de corriger les erreurs dues aux signaux à trajets multiples.

Il est à noter qu'au moins quatre canaux de corrélation utilisés dans un mode de poursuite chacun d'un satellite spécifique visible sont nécessaires pour que les moyens à microprocesseur puissent calculer la position, la vitesse et les données temporelles. Ainsi, il peut être prévu que seul un canal inutilisé soit placé en parallèle d'un canal utilisé au cas où des signaux à trajets multiples sont détectés dans un des canaux utilisés.

Ledit récepteur doit pouvoir être intégré dans un objet comportant une source d'énergie de faible capacité aisément transportable, ce qui impose une réduction du nombre d'éléments de chaque canal de corrélation. De plus la gestion de toutes les tâches de synchronisation doivent pouvoir être réalisées de manière simplifiée notamment dans chaque canal utilisé indépendamment des moyens à microprocesseur. Ce n'est normalement qu'après avoir détecté la présence de signaux à trajets multiples dans un canal utilisé, que les moyens à microprocesseur assistent un canal inutilisé pour la recherche de l'amplitude maximale de la fonction d'auto-corrélation. Ainsi, peu de transfert de données est opéré entre lesdits moyens à microprocesseur et les canaux utilisés ce qui diminue la consommation en énergie dudit récepteur.

Un autre avantage du récepteur de la présente invention est que des paramètres du premier canal normalement utilisé sont transférés au second canal à brancher en parallèle du premier canal par l'intermédiaire des moyens à microprocesseur. De ce fait, le second canal peut opérer plus rapidement pour trouver en coopération avec les moyens à microprocesseur, l'amplitude maximale de la fonction d'auto-corrélation. Le premier canal reste toujours utilisé même si le second canal est branché pour des raisons de stabilité, car il se peut que les signaux à trajets multiples disparaissent. Dans ce cas, le second canal est arrêté et le premier canal fournit les données aux moyens à microprocesseur, notamment pour les opérations de calcul de la position, de la vitesse et des données temporelles d'un récepteur GPS.

L'écart de phase entre la valeur de l'amplitude maximale de la fonction d'auto-corrélation donnée par le second canal et la première valeur d'amplitude de la fonction d'auto-corrélation des signaux en avance de phase du premier canal peut être stocké. Cet écart de phase peut ainsi être introduit comme paramètre supplémentaire d'un second canal inutilisé pour un branchement futur en parallèle d'un premier canal utilisé.

Normalement, les moyens à microprocesseur comprennent des moyens de mémorisation dans lesquels sont enregistrées les informations concernant la position des satellites, leur code spécifique, et les satellites qui sont susceptibles d'être visibles par le récepteur terrestre au moment de sa mise en fonction. Le récepteur peut ainsi savoir quels satellites sont visibles au moment de l'enclenchement des canaux de corrélation sélectionnés.

Ce but, ainsi que d'autres, sont également atteint grâce au procédé de correction des effets des signaux à trajets multiples d'un récepteur qui comprend une première série d'étapes consistant à :

-   configurer et enclencher un certain nombre de premiers canaux pour que chaque canal opère une recherche et une poursuite d'une source émettrice spécifique,
-   déphaser les répliques en avance de phase et en retard de phase du code spécifique de chaque premier canal utilisé à corréler avec les signaux intermédiaires jusqu'à ce que les première et seconde valeurs d'amplitude de la fonction d'auto-corrélation soient égales,
-   mémoriser des valeurs d'amplitude de corrélation des signaux en avance et des signaux en retard, ainsi que des écarts de phase correspondants, pendant la phase de recherche et/ou la phase de poursuite,

ledit procédé étant caractérisé en ce qu'il comprend en outre une seconde série d'étapes consistant à :

-   calculer, à l'aide des valeurs d'amplitude de la fonction d'auto-corrélation et des écarts de phase correspondants mémorisés en phase de recherche et/ou en phase de poursuite pour chaque premier canal utilisé, une première pente de la fonction d'auto-corrélation au point de la première valeur d'amplitude des signaux en avance de phase et une seconde pente de la fonction d'auto-corrélation au point de la seconde valeur d'amplitude des signaux en retard de phase, lorsque le canal est en mode de poursuite de la source émettrice,
-   configurer et enclencher au moins un second canal inutilisé à placer en parallèle d'un premier canal utilisé, si les deux pentes calculées en valeur absolue sont sensiblement différentes, ou si une variation de la première valeur d'amplitude des signaux en avance de phase ou de la seconde valeur d'amplitude des signaux en retard de phase dans un mode de poursuite est constatée,

- déphaser une des répliques de code du second canal sous la commande des moyens à microprocesseur jusqu'à ce que les moyens d'intégration du second canal fournissent une valeur d'amplitude maximale de la fonction d'auto-corrélation entre les première et seconde valeurs d'amplitude de la fonction d'auto-corrélation du premier canal afin que les moyens à microprocesseur puissent extraire les données des signaux radiofréquences de ce second canal en corrigeant les effets des signaux à trajets multiples.

Les buts, avantages et caractéristiques du récepteur de signaux radiofréquences, ainsi que du procédé de mise en action dudit récepteur, apparaîtront mieux dans la description suivante de formes d'exécution illustrées par les dessins sur lesquels :

- la figure 1 déjà citée représente un récepteur de signaux radiofréquences de type GPS captant des signaux d'au moins quatre satellites dont des signaux de deux satellites sont déviés de leur trajectoire par des obstacles,
- la figure 2 représente schématiquement les diverses parties du récepteur de signaux radiofréquences selon l'invention,
- la figure 3 représenté schématiquement les éléments d'un corrélateur d'un canal de l'étage de corrélation du récepteur selon l'invention,
- les figures 4a et 4b représentent respectivement un graphique d'une fonction d'auto-corrélation, et un signal intermédiaire à corréler avec des répliques décalées en phase pour définir la fonction d'auto-corrélation,
- la figure 5a représente un graphique de la fonction d'auto-corrélation, l'amplitude des signaux corrélés avec la réplique en avance (Early) étant égale à l'amplitude des signaux corrélés avec la réplique en retard (Late) dans une phase de poursuite,
- la figure 5b représente un graphique de la fonction de corrélation obtenue par soustraction de la composante en avance et de la composante en retard,
- les figures 6a et 6b représentent des graphiques de fonction d'auto-corrélation dans le cas de signaux à trajets multiples où l'amplitude des signaux corrélés avec la réplique en avance (Early) est égale à l'amplitude des signaux corrélés avec la réplique en retard (Late) dans une phase de poursuite, mais avec un écart de phase par rapport à des signaux sans trajets multiples,
- la figure 6c représente un graphique de la fonction de corrélation obtenue par soustraction de la composante en avance et de la composante en retard dans le cas de signaux à trajets multiples, et

- la figure 7 représente un organigramme des étapes du procédé de mise en action du récepteur que des signaux à trajets multiples soient détectés ou non.

Dans la description suivante, plusieurs éléments du récepteur de signaux radiofréquence notamment du type GPS, qui sont bien connus de l'homme du métier dans ce domaine technique, ne sont relatés que de manière simplifiée. Le récepteur décrit ci-dessous est de préférence un récepteur GPS. Il pourrait néanmoins servir dans un système de navigation GLONASS ou GALILEO ou un autre système de navigation, ou également dans un réseau de téléphonie mobile.

Comme montré dans la figure 1, les signaux radiofréquences SV1 à SV4 captés par une antenne 2 d'un récepteur GPS sont émis par quatre satellites visibles S1 à S4. Les signaux SV1 à SV4 de ces quatre satellites sont nécessaires audit récepteur GPS 1 pour pouvoir extraire toutes les informations utiles au calcul de sa position, de sa vitesse et/ou de données temporelles. Toutefois sur leur trajet, certains signaux radiofréquences SV1' et SV3' peuvent être réfléchis par divers obstacles, tels que des bâtiments B. Ces signaux déviés SV1' et SV3' viennent perturber la détection des signaux directs SV1 et SV3 captés par le récepteur. Les canaux de corrélation en phase de recherche et de poursuite des satellites S1 et S3 sont donc soumis à l'effet des signaux à trajets multiples ce qui induit une erreur de calcul de la position. Comme il sera expliqué dans la suite la description, au moins un canal défini comme inutilisé est placé en parallèle de chaque canal utilisé poursuivant les satellites S1 et S3 pour corriger les effets des signaux à trajets multiples.

Le récepteur GPS peut équiper de préférence un objet portable, tel qu'une montre-bracelet, afin de fournir au besoin des données de position, de vitesse et de l'heure locale au porteur de la montre. Comme la montre possède un accumulateur ou une pile de petite taille, la puissance consommée doit être la plus faible possible lors du fonctionnement du récepteur GPS.

Bien entendu, le récepteur GPS pourrait équiper d'autres objets portables de petite taille possédant un accumulateur ou une pile de petite taille, tels que des téléphones portables.

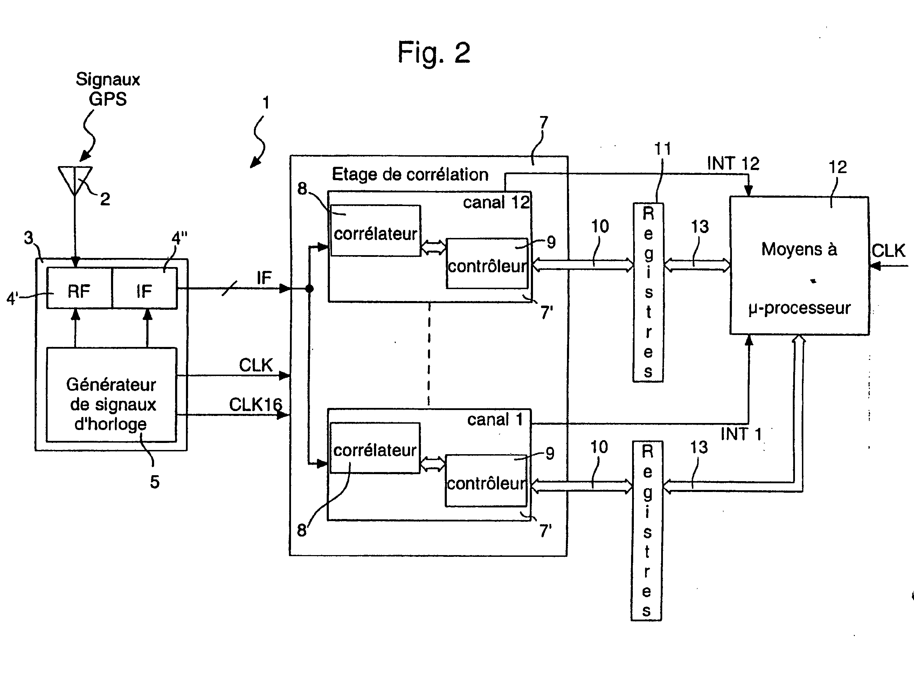

Le récepteur GPS 1 est représenté schématiquement à la figure 2. Il comprend des moyens de réception et de mise en forme avec conversion de fréquence des signaux radiofréquences 3 fournis par une antenne 2 pour produire des signaux intermédiaires IF, un étage de corrélation 7 constitué notamment de 12 canaux de corrélation 7' pour recevoir les signaux intermédiaires IF, un bus de transfert de données 10 reliant chaque canal à un registre tampon 11 respectif, et finalement un bus de données 13 reliant chaque registre tampon à des moyens à microprocesseur 12.

Les signaux intermédiaires IF sont de préférence, sous forme complexe, composés d'une composante de signaux en phase I et d'une composante de signaux en quadrature Q à une fréquence de l'ordre de 400 kHz fournis par les moyens de mise en forme 3. Les signaux intermédiaires complexes IF sont représentés sur la figure 2 par une ligne en gras coupée d'une barre oblique définissant 2 bits.

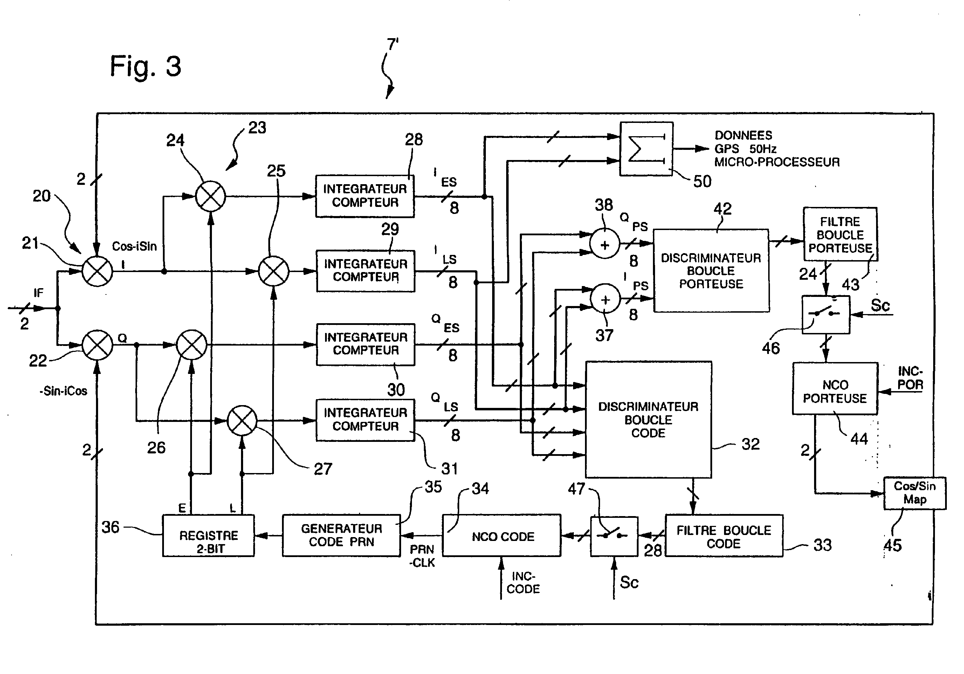

Le nombre de canaux 7' à disposition dans le récepteur 1 doit être supérieur au nombre maximum de satellites visibles en tout point de la Terre de manière qu'il subsiste un certain nombre de canaux inutilisés. Ces canaux inutilisés sont destinés à être connectés en parallèle avec des canaux utilisés dans le cas où les moyens à microprocesseur ont détecté la présence de signaux radiofréquences à trajets multiples dans les canaux normalement utilisés. L'influence des signaux à trajets multiples, ainsi que le branchement des canaux inutilisés seront expliqués ci-dessous notamment en référence aux figures 3 à 6.

Conventionnellement dans les moyens de réception 3, un premier circuit électronique 4' convertit tout d'abord les signaux radiofréquences de fréquence 1,57542 GHz en une fréquence par exemple de 179 MHz. Un second circuit électronique IF 4" procède à une double conversion pour amener les signaux GPS tout d'abord à une fréquence de 4,76 MHz puis finalement à une fréquence par exemple de 400 kHz en échantillonnant à 4,36 MHz. Des signaux intermédiaires complexes IF échantillonnés et quantifiés à une fréquence de l'ordre de 400 kHz sont ainsi fournis aux canaux 7' de l'étage de corrélation 7.

Pour les opérations de conversion de fréquence, un générateur de signaux d'horloge 5 fait partie des moyens de réception et de mise en forme des signaux radiofréquences 3. Ce générateur est muni par exemple d'un oscillateur à quartz non représenté calibré à une fréquence de l'ordre de 17,6 MHz. Deux signaux d'horloge CLK et CLK16 sont fournis notamment à l'étage de corrélation 7 et aux moyens à microprocesseur 12 pour cadencer toutes les opérations de ces éléments. La première fréquence d'horloge CLK peut valoir 4,36 MHz, tandis que la seconde fréquence d'horloge peut être fixée 16 fois inférieure, c'est-à-dire à 272,5 kHz utilisée pour une grande partie de l'étage de corrélation afin de gagner en consommation d'énergie.

Il est à noter qu'il peut être envisagé d'obtenir le signal d'horloge CLK16 à l'aide d'un diviseur placé dans l'étage de corrélation au lieu d'être intégré avec le générateur de signaux d'horloge 5 dans les moyens de réception 3.

Les signaux fournis par le second circuit 4" donnent dans la moitié des cas des signaux de parité différente (+1 et -1). Il doit donc être tenu compte de cette parité pour les opérations de démodulation des signaux GPS dans le récepteur. Dans une variante de réalisation, le second circuit 4" peut donner des signaux (+3; +1; -1; -3) répartis sur 2 bits de sortie pour la composante en phase, ainsi que pour la composante en quadrature.

Dans le cas du récepteur GPS de la présente invention, des signaux intermédiaires IF à 1-bit de quantification pour la fréquence de la porteuse sont fournis à l'étage de corrélation, même si cette quantification engendre une perte additionnelle de l'ordre de 3 dB sur le rapport du signal sur bruit (SNR).

Les registres 11 de chaque canal sont susceptibles de recevoir des données ou des paramètres de configuration provenant des moyens à microprocesseur. Chaque canal est susceptible de transmettre via les registres des données concernant les messages GPS, l'état du code PRN, l'incrément de fréquence relatif à l'effet Doppler, les pseudo-distances, des valeurs d'amplitude de corrélation avec des écarts de phase et autres données après la corrélation et le verrouillage sur un satellite spécifique.

Les registres tampons 11 sont composés de plusieurs sortes de registres qui sont par exemple les registres de commande et d'états, les registres pour les oscillateurs à commande numérique désignés NCO (Numerically Controlled Oscillator) des canaux, les registres de pseudo-distances, les registres d'énergie, les registres d'écart et d'incrément de la porteuse et du code et des registres de test. Il est à noter que ces registres peuvent accumuler des données pendant la phase de corrélation afin d'être utilisées pendant les procédures d'acquisition et de poursuite des satellites sans forcément être transférées automatiquement au microprocesseur.

Dans une variante de réalisation, un unique bloc de registres 11 peut être envisagé pour tous les canaux 7' de l'étage de corrélation, étant donné que certaines données placées dans le bloc de registres sont communes à chaque canal.

Chaque canal 7' de l'étage de corrélation 7 comprend un corrélateur 8 et un contrôleur 9 destiné à mettre en fonction à l'aide d'un matériel dédicacé notamment l'algorithme de traitement des signaux pour l'acquisition du signal du satellite et la poursuite du satellite détecté par le canal.

Le contrôleur 9 de chaque canal comprend entre autre une unité à mémoires, une unité arithmétique, une unité de synchronisation des bits de données, une unité de commande du corrélateur et une unité d'interruption non visibles sur la figure 1. L'unité à mémoires est composée notamment d'une mémoire RAM pour enregistrer des données momentanées. La mémoire RAM est répartie dans une structure qui peut être non régulière ou régulière. L'unité arithmétique réalise notamment des opérations d'addition, de soustraction, de multiplication, d'accumulation et de décalage.

Dans un mode de fonctionnement normal, toutes les tâches d'acquisition et de poursuite des satellites détectés sont effectuées de manière autonome dans chaque canal respectif de l'étage de corrélation. Ces tâches sont réalisées dans une architecture à bits parallèles où le calcul de plusieurs bits est réalisé en une impulsion d'horloge. Les signaux numériques sont à 1 kHz ce qui permet le traitement de manière autonome desdits signaux des boucles d'asservissement de la fréquence porteuse et du code PRN à un taux de fréquence moins important. Lorsqu'un canal s'est verrouillé sur un satellite, le circuit synchronise le flux de données GPS destiné aux calculs subséquents.

Ainsi, le transfert de données avec les moyens à microprocesseur 12 ne se fait plus pendant toutes les étapes de corrélation. Ce n'est que le résultat de la corrélation de chaque canal 7' de l'étage de corrélation 7 qui est transféré au microprocesseur, en particulier les messages GPS à une fréquence de 50 Hz. Cela a pour conséquence une forte diminution de consommation de courant. Cependant, quand les moyens à microprocesseur doivent brancher un canal inutilisé en parallèle d'un canal normalement utilisé pour corriger les effets des signaux à trajets multiples, les opérations de synchronisation de ce canal inutilisé sont faites par l'intermédiaire desdits moyens à microprocesseur. Mais plusieurs paramètres du canal utilisé sont transférés pour configurer rapidement le canal inutilisé par l'intermédiaire des moyens à microprocesseur sans nuire fortement à la consommation dudit récepteur.

De ce fait, les moyens à microprocesseur 12 comprennent de préférence un microprocesseur 8-bit CoolRISC-816 de EM Microelectronic-Marin SA en Suisse. Ce microprocesseur est cadencé par un signal d'horloge à 4,36 MHz. Les moyens à microprocesseur 12 comprennent également des moyens de mémorisation non représentés dans lesquels toutes les informations concernant la position desdits satellites, leur code de Gold, et les satellites qui sont susceptibles d'être visibles par le récepteur GPS terrestre sont enregistrées.

Pendant toutes les procédures de recherche et de poursuite de satellites, les canaux 7' utilisés émettent des signaux d'interruption INT1 à INT12 à destination du microprocesseur pour l'avertir de données qu'il peut prélever. Dès qu'il reçoit des signaux d'interruption, le microprocesseur doit en général parcourir tous les canaux pour savoir de quel canal proviennent les données à prélever. Ces données peuvent concerner par exemple des paramètres de configuration, des messages GPS, l'état du code pseudo-aléatoire PRN, l'incrément de fréquence relatif à l'effet Doppler, des pseudo-distances, des modes de coupure des moyens de réception, l'état d'intégrateurs compteurs et d'autres informations.

Comme plusieurs signaux d'interruption INT1 à INT12 peuvent survenir en même temps, les moyens à microprocesseur 12 peuvent comporter également un décodeur de priorité des canaux 7' utilisés. Ainsi, le microprocesseur peut accéder directement à un canal émetteur prioritaire qui émet un signal d'interruption selon un ordre déterminé de priorité.

Dans une autre forme de réalisation non représentée, le décodeur de priorité pourrait aussi être intégré dans l'étage de corrélation.

Un unique substrat semi-conducteur peut contenir aussi bien l'intégralité de l'étage de corrélation avec les registres, le décodeur de priorité, le microprocesseur, ainsi qu'éventuellement une partie du générateur de signaux d'horloge.

Lors de la mise en fonction du récepteur 1, plusieurs canaux 7' de l'étage de corrélation 7 sont configurés par les moyens à microprocesseur 12. La configuration de chaque canal consiste à leur introduire en outre différents paramètres relatifs à la fréquence porteuse et au code PRN d'un satellite spécifique à chercher et à poursuivre. Dans un mode de fonctionnement normal, chaque canal est configuré différemment pour chercher et poursuivre son propre satellite. Comme les canaux utilisés ne peuvent se verrouiller que sur des satellites visibles, il restent plusieurs canaux inutilisés.

A la figure 3 est représenté le corrélateur 8 avec une partie pour la boucle d'asservissement du code PRN et une autre partie pour la boucle d'asservissement de la fréquence de la porteuse. Le corrélateur 8 est identique dans chaque canal 7' de l'étage de corrélation 7, mais peut être configuré différemment dans chaque canal. Comme expliqué en référence à la figure 2, en fonctionnement normal chaque canal opère toutes les tâches de synchronisation pour rechercher et poursuivre un satellite visible spécifique indépendamment des moyens à microprocesseur. Ceci simplifie la réalisation dudit récepteur et permet de diminuer la consommation dudit récepteur.

Pour plus de détails relatifs aux divers éléments de ce corrélateur, le lecteur peut se référer à l'enseignement tiré du livre « Understanding GPS Principles and Applications » au chapitre 5 rédigé par Phillip Ward et de l'éditeur Elliott D. Kaplan (Artech House Publishers, USA 1996) au numéro d'édition ISBN 0-89006-793-7, et notamment aux figures 5.8 et 5.13.

En référence à la figure 3, les signaux intermédiaires IF, représentés sur la figure par une ligne en gras coupée d'une barre oblique définissant 2 bits, sont des signaux complexes (I + iQ) composés d'une composante de signaux en phase I à 1 bit et d'une composante de signaux en quadrature Q à 1 bit. Lesdits signaux intermédiaires IF ont été échantillonnés et quantifiés, et sont passés d'abord à travers des premiers mélangeurs 20 de la porteuse. Un mélangeur ou multiplicateur 21 multiplie les signaux IF par le Cosinus moins i fois le Sinus de la réplique de la porteuse générée en interne afin d'extraire les signaux en phase I des signaux complexes, tandis qu'un mélangeur ou multiplicateur 22 multiplie les signaux IF par le moins Sinus moins i fois le Cosinus de la réplique de la porteuse générée en interne afin d'extraire les signaux en quadrature Q des signaux complexes.

Ces signaux Sin et Cos proviennent d'un bloc 45 d'une table COS/SIN du signal de la réplique. Le but de cette première étape dans les premiers mélangeurs 20 est de retirer la fréquence porteuse des signaux portant le message GPS.

Il s'agit après cette opération de trouver l'équivalence du code PRN des signaux d'un satellite à acquérir dans un canal enclenché avec un code PRN généré dans ledit canal correspondant au satellite souhaité. Pour cela, les signaux en phase et en quadrature passent par des seconds mélangeurs 23 pour corréler les signaux I et Q avec une réplique en avance de phase et avec une réplique en retard de phase du code PRN pour obtenir quatre signaux corrélés. Dans chaque canal de l'étage de corrélation, il n'a été gardé que la réplique en avance et en retard sans tenir compte de la réplique ponctuelle. Cela permet de minimiser le nombre d'éléments de corrélation. Toutefois en supprimant la composante ponctuelle de la boucle d'asservissement du code, une perte du rapport signal sur bruit de l'ordre de 2,5 dB est constatée.

Le mélangeur ou multiplicateur 24 reçoit les signaux I et le signal de réplique en avance E (du terme anglais « early ») d'un registre à 2 bits 36 et fournit des signaux corrélés en phase en avance. Le mélangeur ou multiplicateur 25 reçoit les signaux I et le signal de réplique en retard L (du terme anglais « late ») du registre 36 et fournit des signaux corrélés en phase en retard. Le mélangeur ou multiplicateur 26 reçoit les signaux en quadrature Q et le signal en avance E, et fournit des signaux corrélés en quadrature en avance. Enfin, le mélangeur ou multiplicateur 27 reçoit les signaux Q et le signal de réplique en retard L, et fournit des signaux corrélés en quadrature en retard. L'écart entre la réplique en avance E et la réplique en retard L est d'un demi chip dans la réalisation de la présente invention, ce qui fait que l'écart avec une composante centrale ponctuelle P serait de 1/4 chip. Les multiplicateurs peuvent être réalisés par simplification à l'aide de portes logiques XOR par exemple.

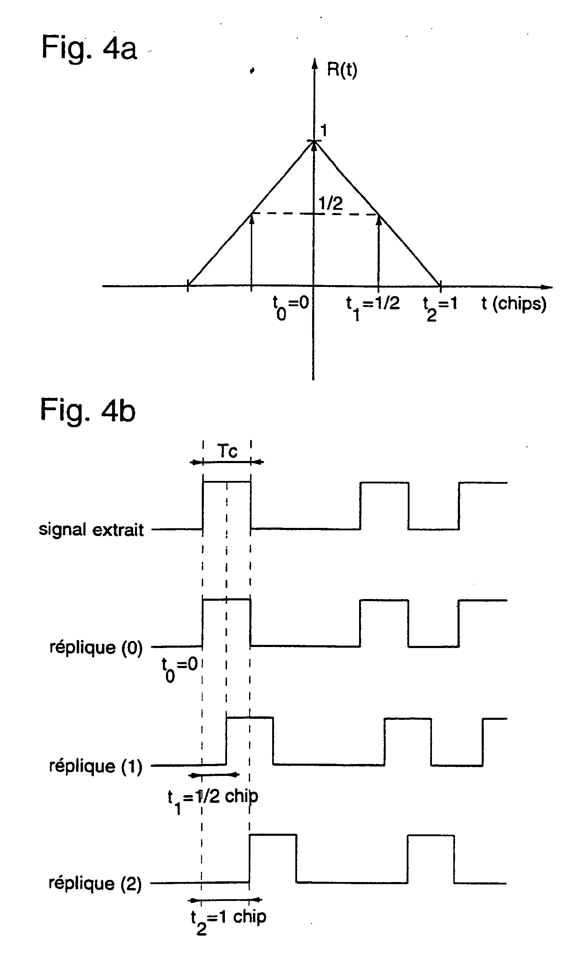

Les quatre signaux corrélés entrent chacun dans des moyens d'intégration composés par des intégrateurs compteurs 28, 29, 30, 31, qui sont des éléments de pré-détection. Ces intégrateurs compteurs fournissent, au terme de chaque période d'intégration, des mots binaires de sortie $I_{ES}$, $I_{LS}$, $Q_{ES}$ et $Q_{LS}$ qui sont représentés à 10 bits. Ces mots binaires définissent des valeurs d'amplitude d'une fonction d'auto-corrélation représentée notamment en figure 4a. Les valeurs d'amplitude sont habituellement normalisées à la valeur d'amplitude des signaux corrélés. Plusieurs valeurs d'amplitude, ainsi que les écarts de phase, concernant les signaux corrélés en avance de phase et les signaux corrélés en retard de phase sont mémorisés dans des moyens à mémorisation dans un mode de recherche du satellite afin de pouvoir servir aux moyens à microprocesseur pour le calcul des pentes au point des valeurs d'amplitude de la fonction d'auto-corrélation des signaux corrélés en avance et en retard. Sur la base du calcul des pentes, les moyens à microprocesseur peuvent détecter si le canal utilisé est sujet aux effets des signaux à trajets multiples.

Les intégrateurs compteurs sont définis pour pouvoir compter jusqu'à un nombre de 1023 ce qui équivaut au nombre de chips du code PRN. Chaque intégrateur compteur 28, 29, 30, 31 d'un canal sélectionné par les moyens à microprocesseur au début d'une recherche est configuré pour fournir un jeu complet de mots binaires $I_{ES}$, $I_{LS}$, $Q_{ES}$ et $Q_{LS}$ toutes les millisecondes.

Toutes les opérations dans les boucles qui suivent ces intégrateurs se font dans une architecture à bits parallèles avec des signaux à une fréquence de 1 kHz. Pour éliminer une partie du bruit du signal utile à démoduler, uniquement les 8 bits de poids forts sont utilisés pour la suite de la chaîne de traitement des signaux numériques.

Les mots binaires de sortie $I_{ES}$, $I_{LS}$, $Q_{ES}$ et $Q_{LS}$, représentés sur la figure par une ligne en gras coupée par une barre oblique définissant 8 bits, sont passés dans un discriminateur de boucle de code 32 et dans un filtre de boucle de code 33. Le discriminateur de boucle de code réalise les opérations de calcul de l'énergie des signaux $I_{ES}$, $I_{LS}$, $Q_{ES}$ et $Q_{LS}$. Une accumulation de valeurs pendant un certain nombre N de cycles d'intégration, par exemple 16 cycles, est réalisée dans le discriminateur de code.

Dans la présente invention, le discriminateur est par exemple non-cohérent du type à blocage de boucle de retard (DLL). Dans ce discriminateur, une soustraction peut être opérée entre les valeurs d'amplitude au carré des signaux en avance de phase et les valeurs d'amplitude au carré des signaux en retard de phase. Toutefois, tout type de discriminateur peut être employé pour autant que les valeurs d'amplitude des signaux en avance de phase soient maintenues sensiblement égales aux valeurs d'amplitude des signaux en retard de phase. Le lecteur peut se reporter également au chapitre 8 intitulé « GPS receivers » rédigé par A. J. Van Dierendonck du livre « Global Positioning System and Applications » publié par American Institute of Aeronautics and Astronautics en 1996.

Sur ce discriminateur, une correction est amenée de la boucle de la porteuse, car lors de l'émission du signal par le satellite l'effet Doppler se fait sentir non seulement sur la fréquence porteuse, mais également sur le code PRN qui est modulé sur la fréquence porteuse. L'apport de la porteuse dans le discriminateur de boucle de code correspond à une division par 1540 de l'incrément d'écart de la porteuse.

Suivant le résultat filtré du discriminateur, un incrément de phase est imposé par l'oscillateur NCO 28-bit au générateur de code PRN 35 afin qu'il transmette la série de bits du code PRN au registre 36 pour faire une nouvelle corrélation. La résolution de fréquence de ce NCO 28-bit est de l'ordre de 16 mHz (pour une fréquence d'horloge de 4,36 MHz).

Les divers résultats de la boucle sont traités par le contrôleur afin qu'il coordonne les opérations d'acquisition et de poursuite. Une fois, qu'il y a synchronisation et verrouillage sur le satellite souhaité les valeurs $I_{ES}$ et $I_{LS}$ sont introduites dans un élément de démodulation 50 capable de fournir le message de données à 50 Hz sur 1 bit par l'intermédiaire du registre d'entrée et de sortie de données aux moyens à microprocesseur. En plus du message, les moyens à microprocesseur peuvent prendre notamment les informations concernant les pseudo-distances insérées dans le registre tampon afin de calculer la position X,Y et Z, la vitesse et l'heure locale précise.

Tous les éléments expliqués ci-dessus ne seront pas décrits de manière plus détaillée, étant donné qu'ils font partie des connaissances générales d'un homme du métier dans ce domaine technique.

La somme des signaux $I_{ES}$ et $I_{LS}$ effectuée dans l'additionneur 37 est utilisée pour créer le signal $I_{PS}$ et la somme des signaux $Q_{ES}$ et $Q_{LS}$ effectuée dans l'additionneur 38 est utilisé pour créer le signal $Q_{PS}$, les signaux $I_{PS}$ et $Q_{PS}$ étant représentés par 8 bits. Ces mots binaires sont introduits à une fréquence de 1 kHz dans un discriminateur de boucle de porteuse 42 (détection d'enveloppe) pour calculer l'énergie des signaux suivi d'un filtre de boucle de porteuse 43. Le discriminateur est composé notamment d'un multiplicateur 8-bit et d'un accumulateur 20-bit. Il est du type à verrouillage de boucle de fréquence et de phase.

Une opération de moyenne de valeurs dans le discriminateur de fréquence est réalisée afin d'accroître la fiabilité et la précision des boucles de poursuite de la porteuse. L'accumulation prévue dans le discriminateur dure un nombre N de cycles, par exemple 16 cycles, ce qui correspond à 16 ms. Les moyens à microprocesseur imposent également les signaux $S_{TC}$ au discriminateur 42 pour les canaux inutilisés placés en parallèle de canaux sélectionnés.

Suivant le résultat du discriminateur et après passage à travers le filtre, l'oscillateur NCO 24-bit de la porteuse 44 reçoit un incrément de fréquence (bin) pour la correction de la réplique de la fréquence porteuse. Ce NCO 24-bit a une résolution de fréquence de l'ordre de 260 mHz.

Les deux procédés d'asservissement du code et de la porteuse sont synchronisés durant la poursuite, ceci bien que les boucles de poursuite de la porteuse sont seulement mises à jour après une confirmation de la présence du signal du satellite.

Il faut savoir que lors de l'émission des signaux radiofréquences par un satellite, l'effet Doppler a une influence sur lesdits signaux aussi bien sur la fréquence porteuse que sur le code PRN, ce qui fait que les boucles d'asservissement du code et de la porteuse sont reliées l'une à l'autre pour obtenir une meilleure précision d'ajustement de la phase du code PRN et de la fréquence porteuse reçue au récepteur.

A chaque époque de corrélation en phase de recherche, la phase de la réplique du code PRN est décalée dans le temps, par exemple par pas de 1 chip, afin de trouver l'écart de phase du satellite. Une fois que le satellite a été trouvé en phase de poursuite, l'ajustement du code se fait par exemple avec des pas de 0,05 à 0,1 chip. De plus, il s'agit de corriger la fréquence porteuse comprenant les effets Doppler ce qui se fait dans une boucle d'asservissement de la porteuse. Il doit être tenu compte en plus des effets Doppler de l'imprécision de l'oscillateur interne et des effets de la ionosphère. Ces erreurs corrigées dans les boucles de code et de porteuse correspondent à un écart de fréquence de $\pm$ 7,5 kHz.

Toutes les tâches de synchronisation sont exécutées dans chaque canal utilisé quand aucun signal à trajets multiples n'a été détecté. Si les moyens à microprocesseur détectent les effets des signaux à trajets multiples dans un premier canal utilisé, un second canal inutilisé est branché en parallèle du premier canal afin de trouver l'amplitude maximale de la fonction d'auto-corrélation. Dans ce cas de figure, les boucles d'asservissement du code et de la porteuse dudit canal ne peuvent plus être utilisées, car il ne s'agit plus avec ce second canal inutilisé d'obtenir l'équivalence de valeurs d'amplitude de la fonction d'auto-corrélation des signaux en avance de phase et en retard de phase en mode de poursuite.

Ce canal inutilisé doit être bouclé avec les moyens à microprocesseur pour les opérations de déphasage d'une des répliques en avance ou en retard afin de trouver la valeur d'amplitude maximale de la fonction d'auto-corrélation entre les deux valeurs d'amplitude du premier canal. Pour ce faire, deux éléments d'interruption 45 et 47 sont placés dans chaque boucle d'asservissement de tous les canaux. Quand les moyens à microprocesseur détectent la présence de signaux à trajets multiples dans le premier canal, le second canal inutilisé reçoit une commande Sc de la part desdits moyens afin d'interrompre les deux boucles d'asservissement.

Aux figures 4a et 4b sont représentés d'une part une fonction d'auto-corrélation et d'autre part des signaux intermédiaires à code spécifique à corréler avec des répliques dudit code.

La fonction d'auto-corrélation, de la figure 4a, montre le résultat de la corrélation de deux signaux logiques à impulsions rectangulaires identiques, mais décalés en phase l'un de l'autre. Lesdits signaux logiques corrélés sont d'une part les signaux intermédiaires à code pseudo-aléatoire et d'autre part une réplique dudit code pseudo-aléatoire générée dans les canaux du récepteur. La formule générale de la fonction d'auto-corrélation est la suivante :

$$R(t) = \int f(\tau) f(t+\tau) d\tau$$

où $f(\tau)$ vaut A, qui est l'amplitude des signaux à corréler de forme rectangulaire, pour $\tau$ en valeur absolue plus petit ou égal à $T_c/2$ et 0 autrement. $T_c$ représente 1 chip qui correspond à 977,5 ns puisque la fréquence du code pseudo-aléatroire est de 1,023 MHz. Comme les signaux sont des signaux rectangulaires, cette fonction R(t) est définie donc uniquement par la formule suivante :

$$R(t) = A^2 T_c (1 - |t|/T_c) \quad \text{pour } |t| \leq T_c$$

$$R(t)= 0 \qquad \text{ailleurs}$$

Dans un cas sans perturbation par les effets de signaux à trajets multiples, la forme de la fonction d'auto-corrélation est triangulaire avec une pente en valeur absolue égale de chaque côté du sommet de ladite fonction. L'amplitude A des signaux vaut 1 ce qui fait que la valeur d'amplitude, définie comme normalisée, vaut 1 au sommet de ladite fonction lorsque les signaux à corréler sont parfaitement en phase.

A la figure 4b, la réplique (0), d'écart de phase t=0, est parfaitement en phase avec le signal extrait (signaux intermédiaires) ce qui donne une valeur d'amplitude maximale égale à 1. La réplique (1), d'écart de phase t=1/2 chip par rapport au signal extrait, donne une valeur d'amplitude égale 1/2. Finalement, la réplique (2), d'écart de phase t=1 chip par rapport au signal extrait donne une valeur d'amplitude égale à 0.

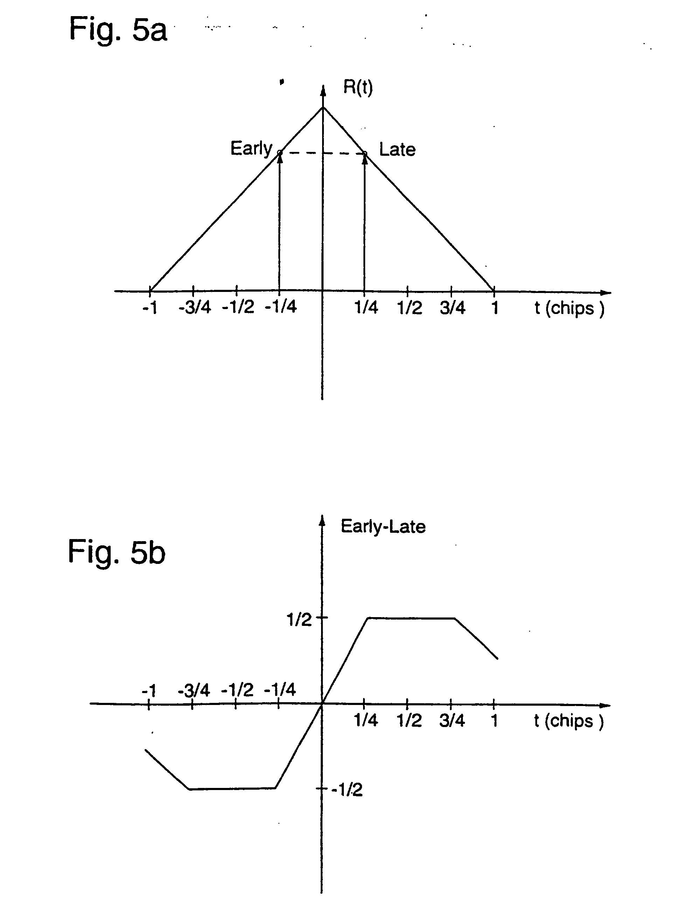

Le récepteur GPS de la présente invention génère deux répliques du code pseudo-aléatoire en avance de phase et en retard de phase à corréler chacune avec les signaux intermédiaires. L'écart de phase entre les deux répliques est de 1/2 chip. La figure 5a montre une fonction d'auto-corrélation où sont représentés les valeurs d'amplitude des signaux corrélés en avance de phase (Early) et en retard de phase (Late) dans un mode de poursuite du satellite visible. La valeur d'amplitude Early ajustée en mode poursuite est décalée de -1/4 chip du sommet de la fonction d'auto-corrélation, et la valeur d'amplitude Late ajustée en mode poursuite est décalée de 1/4 chip du sommet de ladite fonction.

En fonctionnement normal, les valeurs d'amplitude des signaux en avance de phase et en retard de phase du canal utilisé sont donc égales dans le mode de poursuite du satellite visible. Ces valeurs d'amplitude ne sont donc jamais au maximum de la fonction d'auto-corrélation. Le discriminateur de code opère une soustraction des valeurs d'amplitude des signaux en avance et des signaux en retard à chaque période d'intégration. Par cette soustraction, le discriminateur de code peut ainsi fournir un incrément de correction de code plus précis.

Lorsque ces valeurs d'amplitude sont égales, le résultat de la soustraction dans le discriminateur donne une valeur nulle ce qui est espéré pour se trouver en mode de poursuite. La fonction de corrélation de la différence de ces valeurs d'amplitude dans le discriminateur est montrée à la figure 5b.

Il est à noter que la fonction d'auto-corrélation présentée en figure 5a ne présente pas une forme idéale triangulaire, car un filtrage passe-bande de 2 MHz est opéré dans les moyens de réception et de mise en forme, ce qui supprime plusieurs lobes du spectre du puissance. La fonction d'auto-corrélation présente donc un arrondi à son sommet et non une pointe.

Lorsque des signaux radiofréquences sont déviés par des obstacles sur leur trajet, les signaux captés par le récepteur sont des signaux à trajets multiples. Ces signaux s'additionnent des signaux radiofréquences provenant directement du satellite émetteur poursuivi. Ces effets perturbent le calcul de la position du récepteur si un des canaux est en mode de poursuite d'un tel satellite.

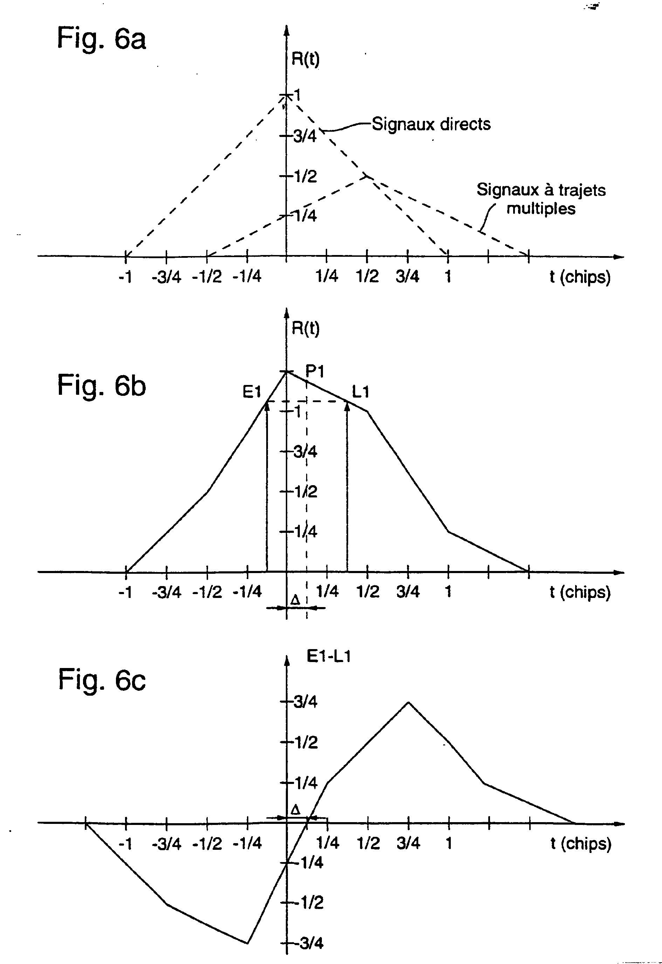

La figure 6a représente deux fonctions d'auto-corrélation pour des signaux directs captés par le récepteur et des signaux à trajets multiples. Comme on peut le remarquer généralement, la fonction d'auto-corrélation des signaux à trajets multiples est décalée vers la droite de la fonction d'auto-corrélation des signaux directs. De plus, la valeur d'amplitude maximale de la fonction d'auto-corrélation des signaux à trajets multiples est inférieure à celle de la fonction d'auto-corrélation des signaux directs.

A la figure 6a, la fonction d'auto-corrélation des signaux à trajets multiples est du type constructif, c'est-à-dire que la valeur d'amplitude maximale est positive. Il est également possible que les signaux à trajets multiples conduisent à une fonction d'auto-corrélation dont la valeur d'amplitude maximale est négative. On parle dans ce cas, de signaux à trajets multiples destructifs.

La figure 6b montre une fonction d'auto-corrélation résultante obtenue en sortie des moyens d'intégration du récepteur quand des signaux à trajets multiples sont présents. Cette fonction résultante est l'addition des deux fonctions d'auto-corrélation montrée en figure 6a.

Un canal, mis en fonction pour chercher et poursuivre un satellite dont les signaux sont déviés de leur trajectoire, présente des valeurs d'amplitude de la fonction d'auto-corrélation des signaux corrélés en avance de phase E1 et en retard de phase L1 égales, mais avec un décalage de phase Δ par rapport au sommet de ladite fonction. Dans le cas de signaux à trajets multiples constructifs, les deux valeurs d'amplitude égales en mode de poursuite sont supérieures aux valeurs d'amplitude d'un canal utilisé qui n'est pas influencé par de tels signaux à trajets multiples. Comme le sommet P1 de la fonction d'auto-corrélation se trouve généralement à un écart de phase égal entre les deux répliques en avance et en retard, les signaux à trajets multiples créent une erreur de phase représentée par le décalage Δ.

A la figure 6b, ce décalage Δ est d'environ 1/8e de chip, ce qui correspond à une erreur de 35 m sur la position calculée par les moyens à microprocesseur.

La figure 6c montre la fonction d'auto-corrélation de la soustraction E1-L1 des valeurs d'amplitude des signaux en avance de phase et en retard de phase obtenue dans le discriminateur de code avec l'influence des signaux à trajets multiples.

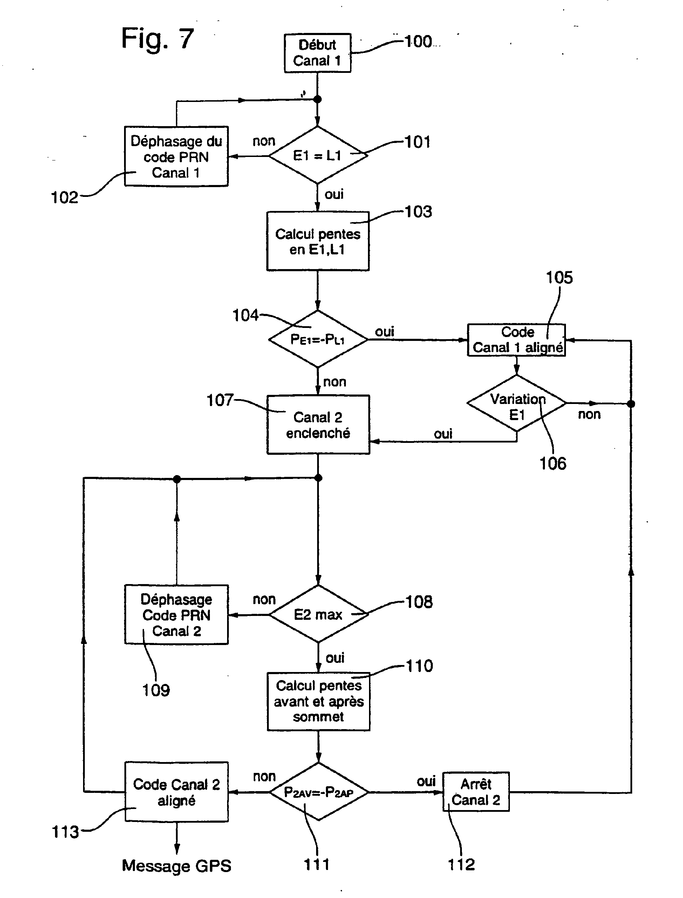

Pour comprendre comment le récepteur agit pour corriger l'influence des signaux à trajets multiples, on se référera à la figure 7 qui montre un organigramme des étapes du procédé de mise en action du récepteur. Il est à noter que les moyens à microprocesseur doivent normalement configurer au moins quatre canaux pour la poursuite de quatre satellites visibles afin de calculer la position du récepteur. Cependant par mesure de simplification, les étapes du procédé ne sont décrites à l'aide de la figure 7 que pour un canal sélectionné.

A l'étape 100, un premier canal est sélectionné par les moyens à microprocesseur pour chercher et poursuivre un satellite visible. Le premier canal recherche le satellite visible en corrigeant les répliques de la porteuse et du code à corréler aux signaux intermédiaires dans les boucles d'asservissement de la porteuse et du code.

Pendant cette phase de recherche, un contrôle des valeurs d'amplitude de la fonction d'auto-corrélation des signaux en avance de phase et en retard de phase en sortie des moyens d'intégration est opéré à l'étape 101. Si les valeurs d'amplitude ne sont pas égales, un déphasage du code pseudo-aléatoire PRN est fait à l'étape 102. En principe en phase de recherche, un décalage d'un chip de la réplique du code est réalisé.

Pendant toutes les phases de recherche dudit satellite, les valeurs d'amplitude en sortie des moyens d'intégration sont mémorisées, ainsi que les écarts de phase correspondants.

Dès que les valeurs d'amplitude E1 et L1 du premier canal sont égales, le calcul des pentes aux points E1 et L1 est réalisée par les moyens à microprocesseur, au cours d'une étape 103. Une comparaison des pentes calculées est faite à l'étape 104. Si les pentes $P_{E1}$ et $P_{L1}$ sont sensiblement égales en valeur absolue, le premier canal n'est pas influencé par des signaux à trajets multiples. Ce premier canal, aligné à l'étape 105, peut ainsi fournir les données précises aux moyens à microprocesseur pour le calcul notamment de la position en X, Y et Z.

Même si les moyens à microprocesseur n'ont pas détecté la présence de signaux à trajets multiples dans le premier canal, il se peut néanmoins que des signaux à trajets multiples apparaissent lors du déplacement dudit récepteur. Afin de s'assurer que le premier canal en mode de poursuite n'est pas influencé par lesdits signaux à trajets multiples, un contrôle de la valeur d'amplitude de la fonction d'auto-corrélation des signaux en avance et/ou en retard est également opéré.

Tant qu'aucune variation d'amplitude E1 à l'étape 106 n'est constatée, le premier canal fournit toujours des données précises aux moyens à microprocesseur sans effets de signaux à trajets multiples. Par contre si une variation d'amplitude E1 apparaît, les moyens à microprocesseur configure et enclenche à l'étape 107 un second canal inutilisé pour être enclenché en parallèle du premier canal. Le second canal est également enclenché si à l'étape 104, les pentes calculées en valeur absolue pour le premier canal sont sensiblement différentes.

Le second canal est configuré à l'aide de paramètres du premier canal mémorisés par l'intermédiaire des moyens à microprocesseur. Cela permet un guidage en phase de la réplique de code du second canal dans le but de chercher rapidement la valeur d'amplitude maximale E2 à l'étape 108. Cette valeur d'amplitude E2 maximale se trouve entre les deux valeurs d'amplitude E1 et L1 en mode de poursuite du premier canal. Comme le second canal doit trouver cette valeur d'amplitude maximale soit avec la réplique du code en avance soit avec la réplique du code en retard, les boucles d'asservissement du second canal ne peuvent être directement utilisées. De ce fait, les moyens à microprocesseur sont chargés d'asservir le second canal pour trouver le sommet de la fonction d'auto-corrélation par une méthode de régression linéaire ou par un algorithme d'optimisation du type Newton-Raphson. Une commande est donc imposée aux deux éléments d'interruption du second canal pour déconnecter ses boucles d'asservissement.

Tant que la valeur d'amplitude E2 n'est pas maximale, un déphasage du code de l'une des répliques du code du second canal est opéré à l'étape 109. Pendant toutes ces opérations de recherche de la valeur d'amplitude maximale, toutes les valeurs d'amplitude E2 du second canal entre les deux valeurs d'amplitude E1 et L1 sont mémorisées, ainsi que les écarts de phase correspondants.

Quand la valeur d'amplitude E2 maximale a été trouvée à l'étape 108, un calcul des pentes de chaque côté du sommet de la fonction d'auto-corrélation, à l'étape 110, est réalisé à l'aide des valeurs d'amplitude mémorisées. Si les pentes $P_{2AV}$ et $P_{2AV}$ sont sensiblement différentes en valeur absolue, ce n'est que le second canal aligné sur la valeur d'amplitude maximale à l'étape 113 qui fournit les données précises aux moyens à microprocesseur pour le calcul notamment de la position. Un contrôle continuel de la valeur d'amplitude du second canal est opéré.

Si les pentes $P_{2AV}$ et $P_{2AV}$ en valeur absolue sont sensiblement égales, cela a pour conséquence que les signaux à trajets multiples ne sont plus présents. Dans ce cas, le second canal, à l'étape 112, peut être arrêté. Ainsi, les moyens à microprocesseur peuvent à nouveau prendre les données précises du premier canal comme ce dernier n'a pas été arrêté à l'enclenchement du second canal.

Comme le récepteur qui vient d'être décrit est destiné à équiper un objet portable de taille réduite, tel qu'une montre-bracelet ou un téléphone mobile, un seul canal inutilisé est de préférence enclenché en parallèle d'un des canaux utilisés lorsque les moyens à microprocesseur ont détecté la présence de signaux à trajets multiples dans ledit canal utilisé. Il suffit comme indiqué auparavant qu'au moins quatre canaux soient sélectionnés initialement pour la poursuite chacun d'un satellite visible spécifique.

Normalement, le second canal n'est enclenché qu'en mode de poursuite d'un satellite visible par le premier canal. Cependant, comme les paramètres de chaque canal, ainsi que des écarts de phase, sont stockés dans des moyens de mémorisation, le second canal peut être enclenché en parallèle du premier canal même lorsque ce dernier est un phase de recherche. Les moyens à microprocesseur savent si les canaux utilisés sont susceptibles d'être influencés par des signaux à trajets multiples.

A partir de la description qui vient d'être faite de multiples variantes de réalisation du récepteur, notamment du type GPS, peuvent être conçues par l'homme du métier sans sortir du cadre de l'invention définie par les revendications.

**Revendications**

1. Récepteur de signaux radiofréquences modulés par des codes spécifiques de sources émettrices, notamment du type GPS, ledit récepteur comprenant :

   - des moyens de réception et de mise en forme avec conversion de fréquence des signaux radiofréquences (3) pour produire des signaux intermédiaires (IF),
   - un étage de corrélation (7) composé de plusieurs canaux de corrélation (7') pour recevoir les signaux intermédiaires, chaque canal étant muni d'un corrélateur (8) dans lequel les signaux intermédiaires sont corrélés, dans au moins une boucle d'asservissement du corrélateur lorsque le canal est utilisé, avec au moins deux répliques en avance de phase et en retard de phase du code spécifique d'une source émettrice visible à chercher et à poursuivre, le corrélateur comprenant des moyens d'intégration (28, 29, 30, 31) des signaux corrélés pour fournir, au terme de chaque période d'intégration, une première valeur d'amplitude de la fonction d'auto-corrélation des signaux en avance de phase et une seconde valeur d'amplitude de la fonction d'auto-corrélation des signaux en retard de phase, dans un mode de poursuite de la source émettrice les première et seconde valeurs d'amplitude étant maintenues sensiblement égales,
   - des moyens à microprocesseur (12) reliés à l'étage de corrélation pour traiter les données extraites, après corrélation, des signaux radiofréquences,

   ledit récepteur étant **caractérisé en ce qu'**au moins un second canal inutilisé est configuré par l'intermédiaire des moyens à microprocesseur pour être placé en parallèle d'au moins un premier canal utilisé pour la recherche et/ou la poursuite d'une même source émettrice visible quand les moyens à microprocesseur ont détecté la présence de signaux radiofréquences à trajets multiples dans le premier canal utilisé, les moyens à microprocesseur assurant un asservissement du second canal pour la génération d'une réplique du code spécifique à corréler avec les signaux intermédiaires afin que les moyens d'intégration du second canal fournissent une valeur d'amplitude maximale de la fonction d'auto-corrélation entre les première et seconde valeurs d'amplitude de la fonction d'auto-corrélation du premier canal.

2. Récepteur selon la revendication 1, **caractérisé en ce que** plusieurs valeurs d'amplitude de la fonction d'auto-corrélation fournies par les moyens d'intégration concernant au moins le premier canal utilisé, ainsi que des écarts de phase correspondants, sont enregistrés dans des moyens de mémorisation en phase de recherche et/ou de poursuite d'une source émettrice visible pour permettre aux moyens à microprocesseur de calculer une première pente de la fonction d'auto-corrélation au point de la première valeur d'amplitude des signaux en avance de phase et une seconde pente de la fonction d'auto-corrélation au point de la seconde valeur d'amplitude des signaux en retard de phase, lorsque les première et seconde valeurs d'amplitude sont égales, lesdits moyens à microprocesseur détectant la présence de signaux radiofréquences à trajets multiples dans le premier canal quand les première et seconde pentes sont sensiblement différentes -dans un mode de poursuite.

3. Récepteur selon la revendication 1, **caractérisé en ce que** le second canal inutilisé est configuré et placé en parallèle du premier canal utilisé quand les moyens à microprocesseur (12) ont détecté une variation d'amplitude de la fonction d'auto-corrélation des signaux corrélés en avance et/ou en retard dans un mode de poursuite de la source émettrice visible.

4. Récepteur selon la revendication 1 pour la réception de signaux radiofréquences émis par des satellites, **caractérisé en ce que** l'étage de corrélation (7) comprend un nombre de canaux de corrélation (7') supérieur au nombre de satellites visibles de manière qu'au moins un second canal inutilisé puisse être enclenché en parallèle avec un premier canal utilisé pour la recherche et/ou la poursuite d'une même source émettrice visible.

5. Récepteur selon la revendication 4, **caractérisé en ce que** le nombre de canaux (7') est supérieur ou égal à 12.

6. Récepteur selon l'une des revendications 1, 4 et 5, **caractérisé en ce que** plusieurs seconds canaux inutilisés sont configurés pour être enclenchés chacun en parallèle avec un des premiers canaux utilisés, quand les moyens à microprocesseur ont détecté la présence de signaux à trajets multiples dans chacun des premiers canaux.

7. Récepteur selon la revendication 1 pour la réception de signaux radiofréquences émis par des satellites, **caractérisé en ce que** la période d'intégration des moyens d'intégration de premiers canaux utilisés en phase de recherche et/ou de poursuite chacun d'un satellite spécifique visible est équivalente à la période de répétition du code spécifique des satellites émetteurs.

8. Récepteur selon la revendication 1, **caractérisé en ce qu**'un ensemble de registres (11) d'entrée et de sortie de données est placé en interface entre l'étage de corrélation (7) et les moyens à microprocesseur (12) afin de recevoir des données émises par le microprocesseur à destination de l'étage de corrélation et des données fournies de l'étage de corrélation pour le microprocesseur.

9. Récepteur selon la revendication 2, **caractérisé en ce que** chaque canal comprend des moyens de mémorisation des valeurs d'amplitude de la fonction d'auto-corrélation et des écarts de phase correspondants.

10. Récepteur selon la revendication 2, **caractérisé en ce que** les moyens de mémorisation font partie des moyens à microprocesseur (12).

11. Récepteur selon la revendication 1, **caractérisé en ce que**, dans chaque canal, un contrôleur (9), comprenant un algorithme de traitement de signaux numériques, est associé au corrélateur (8) pour permettre, lors de la mise en fonction normale du canal (7'), d'opérer de manière autonome toutes les tâches de synchronisation pour la recherche et la poursuite d'une source émettrice indépendamment des moyens à microprocesseur (12).

12. Récepteur selon l'une des revendications précédentes pour la réception de signaux radiofréquences à fréquence porteuse émis par des satellites, **caractérisé en ce que** chaque canal reçoit des signaux intermédiaires complexes composés d'une composante de signaux en phase (I) et d'une composante de signaux en quadrature (Q),
**en ce que** chaque corrélateur des canaux comprend :

    - des premiers mélangeurs (20) pour la corrélation de la composante de signaux en phase avec une première réplique de fréquence porteuse et pour la corrélation de la composante de signaux en quadrature avec une seconde réplique de fréquence porteuse déphasée de 90° de la première réplique de fréquence porteuse,
    - des seconds mélangeurs (23) pour la corrélation des signaux de sortie en phase des premiers mélangeurs avec une première réplique en avance du code spécifique et avec une seconde réplique en retard du code spécifique et pour la corrélation des signaux de sortie en quadrature des premiers mélangeurs avec la première réplique en avance et avec la seconde réplique en retard,

et **en ce que** quatre intégrateurs compteurs (28, 29, 30, 31) des moyens d'intégration par canal utilisé reçoivent les signaux corrélés de sortie des seconds mélangeurs afin de fournir quatre valeurs d'amplitude ($I_{ES}$, $I_{LS}$, $Q_{ES}$ et $QL_S$) de la fonction d'auto-corrélation.

13. Récepteur selon l'une des revendications 1 et 12 , **caractérisé en ce que** les signaux en avance de phase ont un écart de phase d'un demi-chip par rapport aux signaux en retard de phase.

14. Récepteur selon la revendication 12, **caractérisé en ce que** chaque corrélateur (8) des canaux (7'), à la suite des intégrateurs compteurs, comprend, dans la boucle d'asservissement de code, un discriminateur de boucle de code (32), le discriminateur de code opérant une soustraction de chaque valeur d'amplitude de la fonction d'auto-corrélation des signaux en avance et des signaux en retard de manière à fournir un incrément de correction du code pour les répliques du code sur une période de discriminateur qui est N fois supérieure à la période d'intégration, N étant un nombre entier, un filtre de boucle de code (33), un premier oscillateur à commande numérique (34), un générateur de code relié à un registre 2-bit délivrant les répliques en avance de phase et en retard de phase du code spécifique d'une source émettrice au second étage multiplicateur (23), et, dans une boucle d'asservissement de la porteuse, un discriminateur de boucle porteuse (42), un filtre de boucle porteuse (43), un second oscillateur numérique (44), et un bloc (45) pour la fourniture au premier étage multiplicateur (20) des première et seconde répliques de la fréquence porteuse, des éléments d'interruption (46, 47) de boucle commandés par les moyens à microprocesseur (12) étant placés dans chaque boucle d'asservissement de manière à permettre auxdits moyens à microprocesseur d'assurer un asservissement d'un second canal inutilisé placé en parallèle d'un premier canal utilisé quand une commande d'interruption est imposée auxdits éléments du second canal.

15. Procédé de correction des effets des signaux à trajets multiples dans un récepteur de signaux radiofréquences modulés par des codes spécifiques de sources émettrices
le procédé comprenant une première série d'étapes consistant à :

    - configurer et enclencher un certain nombre de premiers canaux pour que chaque canal opère une recherche et une poursuite d'une source émettrice spécifique,
- déphaser les répliques en avance de phase et en retard de phase du code spécifique de chaque premier canal utilisé à corréler avec les signaux intermédiaires jusqu'à ce que les première et seconde valeurs d'amplitude de la fonction d'auto-corrélation soient égales,
- mémoriser des valeurs d'amplitude de corrélation des signaux en avance et des signaux en retard, ainsi que des écarts de phase correspondants, pendant la phase de recherche et/ou la phase de poursuite, ledit procédé étant **caractérisé en ce qu'**il comprend une seconde série d'étapes consistant à :
- calculer, à l'aide des valeurs d'amplitude de la fonction d'auto-corrélation et des écarts de phase correspondants mémorisés en phase de recherche et/ou en phase de poursuite pour chaque premier canal utilisé, une première pente de la fonction d'auto-corrélation au point de la première valeur d'amplitude des signaux en avance de phase et une seconde pente de la fonction d'auto-corrélation au point de la seconde valeur d'amplitude des signaux en retard de phase, lorsque le canal est en mode de poursuite de la source émettrice,
- configurer et enclencher au moins un second canal inutilisé à placer en parallèle d'un premier canal utilisé, si les deux pentes calculées sont sensiblement différentes en valeur absolue, ou si une variation de la première valeur d'amplitude des signaux en avance de phase ou de la seconde valeur d'amplitude des signaux en retard de phase dans un mode de poursuite est constatée,
- déphaser une des répliques de code du second canal sous la commande de moyens à microprocesseur jusqu'à ce que les moyens d'intégration du second canal fournissent une valeur d'amplitude maximale de la fonction d'auto-corrélation entre les première et seconde valeurs d'amplitude de la fonction d'auto-corrélation du premier canal afin que les moyens à microprocesseur puissent extraire les données des signaux radiofréquences de ce second canal en corrigeant les effets des signaux à trajets multiples.

16. Procédé selon la revendication 15, **caractérisé en ce que** des valeurs d'amplitude de la fonction d'auto-corrélation du second canal, ainsi que des écarts de phase correspondants, sont mémorisés jusqu'à ce que la valeur d'amplitude maximale soit fournie par les moyens d'intégration du second canal.

17. Procédé selon la revendication 16, **caractérisé en ce que** les moyens à microprocesseur calcule les pentes de variation d'amplitude de la fonction d'auto-corrélation avant et après la valeur d'amplitude maximale du second canal, et **en ce que** le second canal est arrêté si les pentes sont sensiblement égales en valeur absolue, les moyens à microprocesseur pouvant extraire les données des signaux radiofréquences du premier canal.

**Claims**

1. Receiver for radio-frequency signals modulated by specific codes of transmitting sources, in particular of the GPS type, said receiver including:

- receiving and shaping means with frequency conversion of the radio-frequency signals (3) for generating intermediate signals (IF),
- a correlation stage (7) formed of several correlation channels (7') for receiving the intermediate signals, each channel being provided with a correlator (8) in which the intermediate signals are correlated, in at least one control loop of the correlator when the channel is being used, with at least two early and late replicas of the specific code of a visible transmitting source to be searched and tracked, the correlator including integration means (28, 29, 30, 31) for the correlated signals, to provide, at the end of each integration period, a first amplitude value of the auto-correlation function of the early signals and a second amplitude value of the auto-correlation function of the late signals, in a tracking mode of the transmitting source the first and second amplitude values being kept substantially equal,
- microprocessor means (12) connected to the correlation stage for processing the data extracted, after correlation, from the radio-frequency signals, said receiver being **characterised in that** at least a second unused channel is configured via the microprocessor means to be placed in parallel to at least a first operating channel for searching and/or tracking the same visible transmitting source, when the microprocessor means have detected the presence of multipath radio-frequency signals in the first operating channel, the microprocessor means enslaving the second channel for generating a specific code replica to be correlated with the intermediate signals so that the integration means of the second channel provide a maximum amplitude value for the auto-correlation function between the first and second amplitude values of the auto-correlation function of the first channel.

2. Receiver according to claim 1, **characterised in that** several amplitude values of the auto-correlation function provided by the integration means concerning at least the first operating channel, and corresponding phase shifts, are stored in storage means in search and/or tracking phase of a visible transmitting source to enable the microprocessor means to calculate a first slope of the auto-correlation function at the point of the first amplitude value of the early signals and a second slope of the auto-correlation function at the point of the second amplitude value of the late signals, when the first and second amplitude values are equal, said microprocessor means detecting the presence of multipath radio-frequency signals in the first channel when the first and second slopes are substantially different in a tracking mode.

3. Receiver according to claim 1 , **characterised in that** the second unused channel is configured and placed in parallel to the first operating channel when the microprocessor means (12) have detected an amplitude variation in the auto-correlation function of the early and/or late correlated signals in a visible transmitting source tracking mode.

4. Receiver according to claim 1 for receiving radio-frequency signals transmitted by satellites, **characterised in that** the correlation stage (7) includes a higher number of correlation channels (7') than the number of visible satellites so that at least a second unused channel can be switched on in parallel to a first operating channel for searching and/or tracking the same visible transmitting source.

5. Receiver according to claim 4, **characterised in that** the number of channels (7') is higher than or equal to 12.

6. Receiver according to any of claims 1, 4 and 5, **characterised in that** several second unused channels are configured to be switched on each in parallel to one of the first operating channels, when the microprocessor means have detected the presence of multipath signals in each of the first channels.

7. Receiver according to claim 1 for receiving radio-frequency signals transmitted by satellites, **characterised in that** the integration period of the integration means of first operating channels each in visible satellite searching and/or tracking phase is equivalent to the repetition period of the specific code of the transmitting satellites.

8. Receiver according to claim 1, **characterised in that** a set of data input and output registers (11) is placed as an interface between the correlation stage (7) and the microprocessor means (12) in order to receive data transmitted by the microprocessor to the correlation stage and data provided by the correlation stage for the microprocessor.

9. Receiver according to claim 2, **characterised in that** each channel includes storage means for the amplitude values of the auto-correlation function and the corresponding phase shifts

10. Receiver according to claim 2, **characterised in that** the storage means form part of the microprocessor means (12).

11. Receiver according to claim 1, **characterised in that**, in each channel, a controller (9), including a digital signal processing algorithm, is associated with the correlator (8) to allow all the synchronisation tasks for searching and tracking a transmitting source to be performed autonomously independently of the microprocessor means (12), when the channel (7') is set into operation normally.

12. Receiver according to any of the preceding claims for receiving radio-frequency signals with carrier frequency transmitted by satellites, **characterised in that** each channel receives complex intermediate signals formed of an in-phase signal component (I) and a quarter-phase signal component (Q), **in that** each correlator of the channels includes:

- first mixers (20) for correlating the in-phase signal component with a first carrier frequency replica and for correlating the quarter-phase signal component with a second carrier frequency replica offset by 90° with respect to the first carrier frequency replica;
- second mixers (23) for correlating the output in-phase signal of the first mixers with a first early specific code replica and with a second late specific code replica and for correlating the quarter-phase output signal of the first mixers with the first early replica and the second late replica,

and **in that** four integrator counters (28, 29, 30, 31) of the integration means per operating channel receive the correlated output signals from the second mixers in order to provide four amplitude values ($I_{ES}$, $I_{LS}$, $Q_{Es}$ and $Q_{LS}$) of the auto-correlation function.

13. Receiver according to any of claims 1 and 12, **characterised in that** the early signals have a phase shift of a half-chip with respect to the late signals.

14. Receiver according to claim 12, **characterised in that** each correlator (8) of the channels (7'), after the integrator counters, includes, in the code control loop, a code loop discriminator (32), the code discriminator performing a subtraction of each amplitude value of the auto-correlation function of the early and late signals, so as to provide a code correction increment for the code replicas over a discriminator period which is N times greater than the integration period, N being an integer number, a code loop filter (33), a first numerical controlled oscillator (34), a code generator connected to a 2-bit register delivering the early and late replicas of the specific code of a transmitting source to the second multiplier stage (23), and, in a carrier control loop, a carrier loop discriminator (42), a carrier loop filter (43), a second numerical controlled oscillator (44), and a block (45) for providing to the first multiplier stage (20) of the first and second replicas of the carrier frequency, loop interruption elements (46, 47) controlled by the microprocessor means (12) being placed in each control loop so as to enslave a second unused channel placed in parallel to a first operating channel when an interruption instruction is imposed on said elements of the second channel.

15. Method for correcting the effects of multipath signals in a receiver for radio-frequency signals modulated by specific codes of transmitting sources, the method including a first series of steps of :

    - configuring and switching on a certain number of first channels so that each channel searches and tracks a specific transmitting source,
    - phase shifting the early and late replicas of the specific code of each operating channel to be correlated with the intermediate signals until the first and second amplitude values for the auto-correlation function are equal,
    - storing correlation amplitude values for the early signals and late signals, and for corresponding phase shifts, during the search and/or tracking phase, said method being **characterised in that** it further includes a second series of steps of:
    - calculating, using the auto-correlation function amplitude values and corresponding phase shifts stored in search and/or tracking phase for each first operating channel, a first slope of the auto-correlation function at the point of the first amplitude value of the early signals and second slope for the auto-correlation function at the point of the second amplitude value of the late signals, when the channel is in the transmitting source tracking mode,
    - configuring and switching on at least a second unused channel to be placed in parallel to a first operating channel, if the two slopes calculated are, in absolute value, substantially different, or if a variation is observed in the first amplitude value of the early signals or in the second amplitude value of the late signals in a tracking mode,
    - phase shifting one of the code replicas of the second channel under an instruction from the microprocessor means until the integration means of the second channel supply a maximum amplitude value of the auto-correlation function between the first and second amplitude values of the auto-correlation function of the first channel so that the microprocessor means can extract the data from the radio-frequency signals of this second channel while correcting the effects of multipath signals.

16. Method according to claim 15, **characterised in that** amplitude values of the auto-correlation function of the second channel, and corresponding phase shifts, are stored until the maximum amplitude value is supplied by the integration means of the second channel.

17. Method according to claim 16, **characterised in that** the microprocessor means calculate the amplitude variation slopes of the auto-correlation function before and after the maximum amplitude value of the second channel, and **in that** the second channel is stopped if the slopes are substantially equal in absolute value, the microprocessor means being able to extract the data from the radio-frequency signals of the first channel.

**Patentansprüche**

1. Empfänger für Hochfrequenzsignale, die durch spezifische Codes von Sendequellen, insbesondere des Typs GPS, moduliert sind, wobei der Empfänger umfasst:

    - Mittel zum Empfangen und Formen mit Frequenzumsetzung der Hochfrequenzsignale (3), um Zwischensignale (IF) zu erzeugen,
    - eine Korrelationsstufe (7), die aus mehreren Korrelationskanälen (7') aufgebaut ist, um die Zwischensignale zu empfangen, wobei jeder Kanal mit einem Korrelator (8) versehen ist, in dem die Zwischensignale in wenigstens einer Regelungsschleife des Korrelators mit wenigstens zwei Kopien mit Phasenvoreilung bzw. Phasennacheilung des spezifischen Codes einer zu suchenden und zu verfolgenden sichtbaren Sendequelle korreliert werden, wenn der Kanal verwendet wird, wobei der Korrelator Integrationsmittel (28, 29, 30, 31) für korrelierte Signale enthält, um nach Ablauf jeder Integrationsperiode einen ersten Amplitudenwert der Autokorrelationsfunktion der Signale mit Phasenvoreilung und einen zweiten Amplitudenwert der Autokorrelationsfunktion der Signale mit Phasennacheilung zu liefern, wobei in einer Betriebsart des Verfolgens der Sendequelle die ersten und die zweiten Amplitudenwerte im Wesentlichen gleich gehalten werden,
    - Mikroprozessormittel (12), die mit der Korrelationsstufe verbunden sind, um die extrahierten Daten nach der Korrelation der Hochfrequenzsignale zu verarbeiten, wobei der Empfänger **dadurch gekennzeichnet ist, dass** wenigstens ein zweiter nicht verwendeter Kanal über die Mikroprozessormittel konfiguriert wird, um zu wenigstens einem ersten Kanal parallel angeordnet zu werden, der für die Suche und/oder die Verfolgung derselben sichtbaren Sendequelle verwendet wird, wenn die Mikroprozessormittel das Vorhandensein von Hochfrequenzsignalen mit mehreren Wegen in dem ersten verwendeten Kanal erfasst haben, wobei die Mikroprozessormittel eine Regelung des zweiten Kanals für die Erzeugung einer Kopie des spezifischen Codes, der mit den Zwischensignalen korreliert werden soll, sicherstellen, damit die Integrationsmittel des zweiten Kanals einen maximalen Amplitudenwert der Autokorrelationsfunktion zwischen den ersten und den zweiten Amplitudenwerten der Autokorrelationsfunktion des ersten Kanals liefern.

2. Empfänger nach Anspruch 1, **dadurch gekennzeichnet, dass** mehrere Amplitudenwerte der Autokorrelationsfunktion, die von den Integrationsmitteln geliefert werden und wenigstens den ersten verwendeten Kanal betreffen, sowie entsprechende Phasenabstände in Speichermitteln in der Such- und/oder Verfolgungsphase einer sichtbaren Sendequelle aufgezeichnet werden, um den Mikroprozessormitteln zu ermöglichen, eine erste Steigung der Autokorrelationsfunktion am Punkt des ersten Amplitudenwertes der Signale mit Phasenvoreilung und eine zweite Steigung der Autokorrelationsfunktion am Punkt des zweiten Amplitudenwertes der Signale mit Phasennacheilung zu berechnen, wenn die ersten und zweiten Amplitudenwerte gleich sind, wobei die Mikroprozessormittel das Vorhandensein von Hochfrequenzsignalen mit mehreren Wegen in dem ersten Kanal erfassen, wenn die ersten und zweiten Steigungen in einer Verfolgungsbetriebsart im Wesentlichen unterschiedlich sind.

3. Empfänger nach Anspruch 1, **dadurch gekennzeichnet, dass** der zweite nicht verwendete Kanal parallel zum ersten verwendeten Kanal konfiguriert und angeordnet wird, wenn die Mikroprozessormittel (12) eine Änderung der Amplitude der Autokorrelationsfunktion der korrelierten Signale mit Voreilung und/oder Nacheilung in einer Betriebsart des Verfolgens der sichtbaren Sendequelle erfasst haben.

4. Empfänger nach Anspruch 1 für den Empfang von von Satelliten ausgesendeten Hochfrequenzsignalen, **dadurch gekennzeichnet, dass** die Korrelationsstufe (7) eine Anzahl von Korrelationskanälen (7') enthält, die größer als die Anzahl sichtbarer Satelliten ist, derart, dass für die Suche und/oder die Verfolgung derselben sichtbaren Sendequelle wenigstens ein nicht verwendeter zweiter Kanal parallel zu dem ersten verwendeten Kanal zugeschaltet werden kann.

5. Empfänger nach Anspruch 4, **dadurch gekennzeichnet, dass** die Anzahl von Kanälen (7') größer oder gleich 12 ist.

6. Empfänger nach einem der Ansprüche 1, 4 und 5, **dadurch gekennzeichnet, dass** mehrere nicht verwendete zweite Kanäle konfiguriert sind, um jeweils parallel zu einem der verwendeten ersten Kanäle zugeschaltet zu werden, wenn die Mikroprozessormittel das Vorhandensein von Signalen mit mehreren Wegen in jedem der ersten Kanäle erfasst haben.

7. Empfänger nach Anspruch 1 zum Empfangen von Hochfrequenzsignalen, die von Satelliten ausgesendet werden, **dadurch gekennzeichnet, dass** die Integrationsperiode der Integrationsmittel von ersten verwendeten Kanälen in der Such- und/oder Verfolgungsphase eines jeweiligen spezifischen sichtbaren Satelliten zu der Wiederholungsperiode des spezifischen Codes der Sendersatelliten äquivalent ist.

8. Empfänger nach Anspruch 1, **dadurch gekennzeichnet, dass** eine Gesamtheit von Eingangs- und Ausgangs-Datenregistern (11) als Schnittstelle zwischen der Korrelationsstufe (7) und den Mikroprozessormitteln (12) angeordnet ist, um von dem Mikroprozessor zu der Korrelationsstufe gesendete Daten und von der Korrelationsstufe für den Mikroprozessor gelieferte Daten zu empfangen.

9. Empfänger nach Anspruch 2, **dadurch gekennzeichnet, dass** jeder Kanal Mittel zum Speichern der Amplitudenwerte der Autokorrelationsfunktion und der entsprechenden Phasenabstände umfasst.

10. Empfänger nach Anspruch 2, **dadurch gekennzeichnet, dass** die Speichermittel einen Teil der Mikroprozessormittel (12) bilden.

11. Empfänger nach Anspruch 1, **dadurch gekennzeichnet, dass** in jedem Kanal dem Korrelator (8) eine Steuereinheit (9) zugeordnet ist, die einen Algorithmus zum Verarbeiten digitaler Signale enthält, damit der Kanal (7') dann, wenn er in den Normalbetrieb versetzt wird, unabhängig von den Mikroprozessormitteln (12) selbstständig alle Synchronisationsaufgaben für die Suche und die Verfolgung einer Sendequelle ausführen kann.

12. Empfänger nach einem der vorhergehenden Ansprüche zum Empfangen von Hochfrequenzsignalen mit Trägerfrequenz, die von Satelliten ausgesendet werden, **dadurch gekennzeichnet, dass** jeder Kanal komplexe Zwischensignale empfängt, die aus einer phasengleichen Signalkomponente (I) und aus einer Quadratur-Signalkomponente (Q) aufgebaut sind,

dass jeder Korrelator der Kanäle umfasst:

- erste Mischer (20) für die Korrelation der phasengleichen Signalkomponente mit einer ersten Kopie der Trägerfrequenz und für die Korrelation der Quadratur-Signalkomponente mit einer zweiten Kopie der Trägerfrequenz, die zu der ersten Kopie der Trägerfrequenz um 90° phasenverschoben ist,

- zweite Mischer (23) zum Korrelieren der phasengleichen Ausgangssignale der ersten Mischer mit einer ersten, voreilenden Kopie des spezifischen Codes und mit einer zweiten, nacheilenden Kopie des spezifischen Codes und für die Korrelation der Quadratur-Ausgangssignale der ersten Mischer mit der ersten, voreilenden Kopie und mit der zweiten, nacheilenden Kopie,

und dass vier Integratoren/Zähler (28, 29, 30, 31) der Integrationsmittel pro verwendeten Kanal die korrelierten Ausgangssignale der zweiten Mischer empfangen, um vier Amplitudenwerte ($I_{ES}$, $I_{LS}$, $Q_{ES}$ und $Q_{LS}$) der Autokorrelationsfunktion zu liefern.

13. Empfänger nach einem der Ansprüche 1 und 12, **dadurch gekennzeichnet, dass** die Signale mit Phasenvoreilung einen Phasenabstand eines halben Chips in Bezug auf die Signale mit Phasennacheilung haben.

14. Empfänger nach Anspruch 12, **dadurch gekennzeichnet, dass** jeder Korrelator (8) der Kanäle (7') hinter den Integratoren/Zählern in der Code-Regelungsschleife umfasst: einen Code-Schleifendiskriminator (32), wovon jeder eine Subtraktion der jeweiligen Amplitudenwerte der Autokorrelationsfunktion der voreilenden Signale bzw. der nacheilenden Signale ausführt, derart, dass ein Korrekturinkrement des Codes für die Kopien des Codes in einer Diskriminatorperiode geliefert wird, das N-mal größer als die Integrationsperiode ist, wobei N eine ganze Zahl ist, ein Code-Schleifenfilter (33), einen ersten Oszillator (34) mit digitaler Steuerung, und einen Code-Generator, der mit einem 2-Bit-Register verbunden ist, das die Kopien mit Phasenvoreilung und Phasennacheilung des spezifischen Codes einer Sendequelle zur zweiten Multiplikatorstufe (23) liefert; und in einer Regelungsschleife des Trägers umfasst: einen Träger-Schleifendiskriminator (42), ein Träger-Schleifenfilter (43), einen zweiten digitalen Oszillator (44) und einen Block (45) zum Liefern der ersten und der zweiten Kopie der Trägerfrequenz zu der ersten Multiplikatorstufe (20), wobei Unterbrechungselemente (46, 47) der Schleife, die durch die Mikroprozessormittel (12) gesteuert werden, in jeder Regelungsschleife in der Weise angeordnet sind, dass die Mikroprozessormittel eine Regelung eines zweiten nicht verwendeten Kanals, der parallel zu einem ersten verwendeten Kanal angeordnet ist, sicherstellen können, wenn die Unterbrechungssteuerung auf die Elemente des zweiten Kanals angewendet wird.

15. Verfahren zum Korrigieren der Wirkungen von Signalen mit mehreren Wegen in einem Empfänger für Hochfrequenzsignale, die durch spezifische Codes von Sendequellen moduliert sind, wobei das Verfahren eine erste Reihe von Schritten umfasst, die darin bestehen:

- eine bestimmte Anzahl erster Kanäle zu konfigurieren und zuzuschalten, damit jeder Kanal eine Suche und eine Verfolgung einer spezifischen Sendequelle ausführt,

- die Kopien mit Phasenvoreilung und Phasennacheilung des spezifischen Codes jedes ersten verwendeten Kanals, die mit den Zwischensignalen zu korrelieren sind, einer Phasenverschiebung zu unterwerfen, bis der erste und der zweite Amplitudenwert der Autokorrelationsfunktion gleich sind,

- die Amplitudenwerte der Korrelation der voreilenden Signale und der nacheilenden Signale sowie die entsprechenden Phasenabstände während der Phase des Suchens und/oder der Phase der Verfolgung zu speichern,

wobei das Verfahren **dadurch gekennzeichnet ist, dass** es eine zweite Reihe von Schritten umfasst, die darin bestehen:

- mit Hilfe der Amplitudenwerte der Autokorrelationsfunktion und der entsprechenden Phasenabstände, die in der Phase des Suchens und/oder in der Phase der Verfolgung für jeden ersten verwendeten Kanal gespeichert sind, eine erste Steigung der Autokorrelationsfunktion am Punkt des ersten Amplitudenwertes der Signale mit Phasenvoreilung und eine zweite Steigung der Autokorrelationsfunktion am Punkt des zweiten Amplitudenwertes der Signale mit Phasennacheilung zu berechnen, wenn der Kanal in der Betriebsart des Verfolgens der Sendequelle ist,

- wenigstens einen zweiten nicht verwendeten Kanal, der parallel zu einem ersten verwendeten Kanal angeordnet ist, zu konfigurieren und zuzuschalten, wenn die beiden berechneten Steigungen dem Absolutwert nach im Wesentlichen verschieden sind oder wenn eine Änderung des ersten Amplitudenwertes der Signale mit Phasenvoreilung oder des zweiten Amplitudenwertes der Signale mit Phasennacheilung in einer Verfolgungsbetriebsart festgestellt wird, und

- eine der Kopien des Codes des zweiten Kanals unter der Steuerung von Mikroprozessormitteln einer Phasenverschiebung zu unterwerfen, bis die Integrationsmittel des zweiten Kanals einen maximalen Amplitudenwert der Autokorrelationsfunktion zwischen dem ersten und dem zweiten Amplitudenwert der Autokorrelationsfunktion des ersten Kanals liefern, damit die Mikroprozessormittel die Daten der Hochfrequenzsignale dieses zweiten Kanals durch Korrigieren der Wirkungen der Signale mit mehreren Wegen extrahieren können.

16. Verfahren nach Anspruch 15, **dadurch gekennzeichnet, dass** die Amplitudenwerte der Autokorrelationsfunktion des zweiten Kanals sowie die entsprechenden Phasenabstände gespeichert werden, bis der maximale Amplitudenwert durch die Integrationsmittel des zweiten Kanals geliefert wird.

17. Verfahren nach Anspruch 16, **dadurch gekennzeichnet, dass** die Mikroprozessormittel die Steigungen der Veränderung der Amplitude der Autokorrelationsfunktion vor und nach dem maximalen Amplitudenwert des zweiten Kanals berechnen und dass der zweite Kanal angehalten wird, wenn die Steigungen dem Absolutwert nach im Wesentlichen gleich sind, wobei die Mikroprozessormittel die Daten der Hochfrequenzsignale des ersten Kanals extrahieren können.

Fig. 1

Fig. 2

EP 1 265 371 B1

Fig. 3

# Fig. 4a

# Fig. 4b

## Fig. 5a

## Fig. 5b

Fig. 6a

Fig. 6b

Fig. 6c

# Fig. 7

```
                          ┌──────────┐
                          │  Début   │──────100
                          │ Canal 1  │
                          └──────────┘
                                │
  ┌─────────────┐    non       ◇
  │ Déphasage du │◀─────────  E1 = L1 ────101
  │  code PRN    │             ◇
  │   Canal 1    │              │ oui
  └─────────────┘               ▼
     102                 ┌──────────────┐
                         │ Calcul pentes │────103
                         │   en E1,L1    │
                         └──────────────┘
                                │
                                ▼                              105
              104             ◇                          ┌──────────────┐
                ◇    oui                       │ Code         │
             PE1=-PL1 ──────────────────────▶ │ Canal 1 aligné│
                ◇                              └──────────────┘
                │ non                                 │
     107  ┌──────────────┐                           ◇
          │  Canal 2     │◀──────oui───── Variation
          │  enclenché   │                    E1  ──non──▶
          └──────────────┘                   ◇
                │                              106
                ▼
          ┌──────────────┐
          │ Déphasage    │    non    ◇
          │ Code PRN     │◀──────  E2 max ────108
          │  Canal 2     │          ◇
          └──────────────┘           │ oui
              109                     ▼
                             ┌──────────────┐
                             │ Calcul pentes │────110
                             │ avant et après│
                             │    sommet     │
                             └──────────────┘
                                    │
  ┌──────────────┐   non            ◇       oui  ┌──────────┐
  │ Code Canal 2 │◀────────  P2AV=-P2AP ────────▶│  Arrêt   │
  │   aligné     │            ◇                  │ Canal 2  │
  └──────────────┘                               └──────────┘
     113                                              112
        │
        ▼
   Message GPS              111
```

**EP 1 265 371 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9514937 A
- US 5966403 A

- WO 9740398 A

**Littérature non-brevet citée dans la description**

- **PHILLIP WARD.** *Understanding GPS Principles and Applications,* 1996